# EUROPEAN PATENT SPECIFICATION

(11) **EP 3 776 983 B1**
(45) Date of publication and mention of the grant of the patent: **28.06.2023**
(21) Application number: 19718935.0
(22) Date of filing: 02.04.2019
(51) Int. Cl.: H04L 5/00, H04L 27/26, H04L 1/00, H04B 7/02, H04W 84/02, H04L 1/1867, H04W 52/00, H04J 11/00, H04W 72/04, H04L 25/03

(54) **MULTIPLE ACCESS (MA) SIGNATURE TRANSMISSIONS**
SIGNATURÜBERTRAGUNG MIT MEHRFACHZUGRIFF (MA)
TRANSMISSIONS DE SIGNATURE À ACCÈS MULTIPLES (MA)

(30) Priority: 04.04.2018 US 201862652495 P; 08.10.2018 US 201862742576 P
(43) Date of publication of application: 17.02.2021
(73) Proprietor: InterDigital Patent Holdings, Inc., Wilmington, DE 19809 (US)
(72) Inventor: HAGHIGHAT, Afshin, Ile-Bizard, QC H9C 3A7 (CA); OTERI, Oghenekome, San Diego, CA 92127 (US); PAN, Kyle, Jung-Lin, Saint James, NY 11780 (US); BALA, Erdem, East Meadow, NY 11554 (US); CANONNE-VELASQUEZ, Loic, Verdun, QC H3E 1T2 (CA)
(74) Representative: Interdigital
(86) International application number: PCT/US2019/025324
(87) International publication number: WO 2019/195241

(56) References cited:
- WO-A1-2017/139005
- WO-A1-2018/021819
- WO-A1-2018/031620
- INTEL CORPORATION: "NOMA related procedure", 3GPP DRAFT; R1-1802427 INTEL NOMA PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20180226 - 20180302 17 February 2018 (2018-02-17), XP051397952, Retrieved from the Internet: URL:http://www.3gpp.org/ftp/tsg%5Fran/WG1% 5FRL1/TSGR1%5F92/Docs/ [retrieved on 2018-02-17]

## Description

### CROSS-REFERENCE TO RELATED APPLICATIONS

This application claims the benefit of U.S. Provisional Application Serial No. 62/652,495 filed April 04, 2018 and U.S. Provisional Application Serial No. 62/742,576 filed October 08, 2018.

### BACKGROUND

A basic multiple access scheme for new radio (NR) may be orthogonal for downlink and uplink data transmissions. For example, time and frequency physical resources of different users may not be overlapped. Non-orthogonal multiple-access (NOMA) schemes are gaining interest. For example, downlink multi-user superposition transmission (MUST) and NR are gaining interest.

Document INTEL CORPORATION: "NOMA related procedure",3GPP DRAFT; R1-1802427 INTEL NOMA PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,vol. RAN WG1, no. Athens, Greece; 20180226 - 20180302 17 February 2018 (2018-02-17), discloses NOMA resource pool partitioning for support of various MCS, TBS and coverage extension levels and discloses UE's selection or determination of a particular MA signature from a pool of available signatures for a MA signature type (e.g., DM-RS sequence, preamble sequence, spreading code, interleaver-pattern, etc.). Each NOMA sub-region may be tailored for one particular MCS, TBS or coverage enhancement.

### SUMMARY

The invention is set out in the appended claims.

### BRIEF DESCRIPTION OF THE DRAWINGS

FIG. 1A is a system diagram illustrating an example communications system in which one or more disclosed embodiments may be implemented.
FIG. 1B is a system diagram illustrating an example wireless transmit/receive unit (WTRU) that may be used within the communications system illustrated in FIG. 1A according to an embodiment.
FIG. 1C is a system diagram illustrating an example radio access network (RAN) and an example core network (CN) that may be used within the communications system illustrated in FIG. 1A according to an embodiment.
FIG. 1D is a system diagram illustrating a further example RAN and a further example CN that may be used within the communications system illustrated in FIG. 1A according to an embodiment.
FIG. 2 is an example multiple access signature (MAS) resource set definition.
FIG. 3 is an example scheduling request (SR)-based MAS transmission for non-orthogonal multiple-access (NOMA).
FIG. 4 is an example independent MAS indication.
FIG. 5 is an example MAS indication through a demodulation reference signal (DMRS) transmission.
FIG. 6 is an example of NOMA zones with different reliabilities. A wireless transmit/receive unit (WTRU) may transmit within a specific NOMA zone, e.g., based on the reliability of the traffic the WTRU has to send.
FIG. 7 is an example NOMA transmission using NOMA zones with different reliabilities.
FIG. 8 is an example of NOMA zones with similar (e.g., identical) reliabilities. The reliability of the traffic may be determined by the number of zones the WTRU transmits in.
FIG. 9 is an example of a WTRU starting transmission at a NOMA zone. The transmission may have interferers.
FIG. 10 is an example of a WTRU starting transmission at fixed NOMA zones.
FIG. 11 is an example NOMA transmission using NOMA zones with similar (e.g., identical) reliabilities.
FIG. 12 is an example single NOMA zone with multiple signatures.
FIG. 13 is an example WTRU encoding the information element jointly with the actual payload.
FIG. 14 is an example of a WTRU encoding the information element separately.
FIG. 15 is an example NOMA transmission in NOMA zone(s) using a MAS(s).
FIG. 16 is an example NOMA transmission in NOMA zone(s) using a MAS(s).

### DETAILED DESCRIPTION

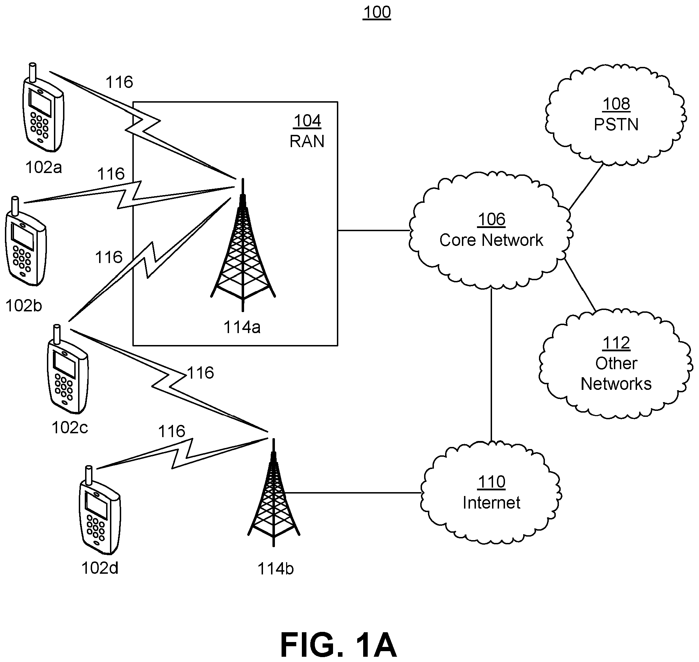

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

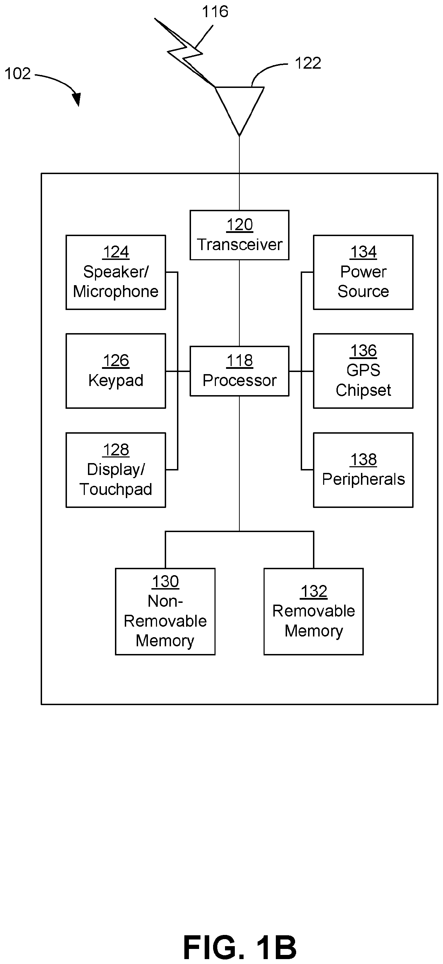

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

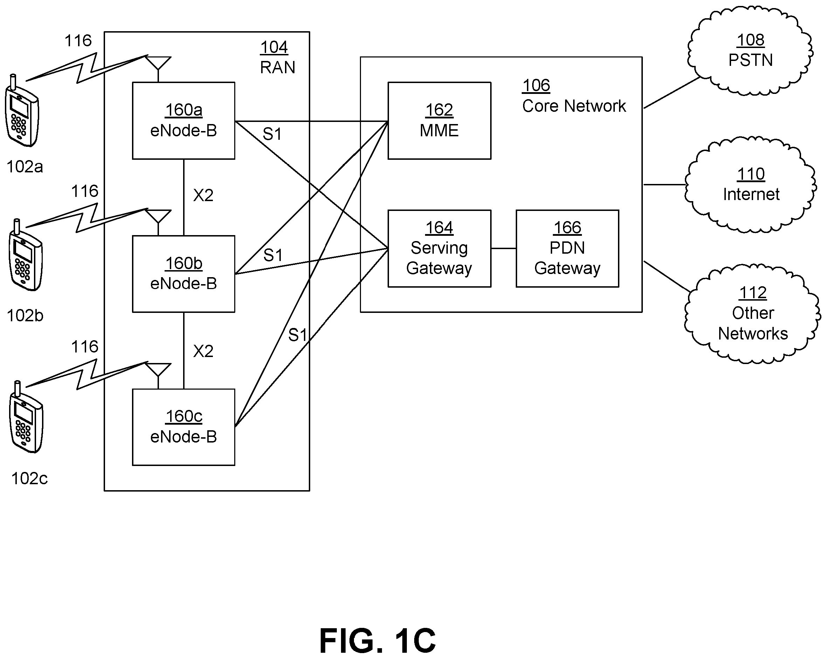

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11 ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

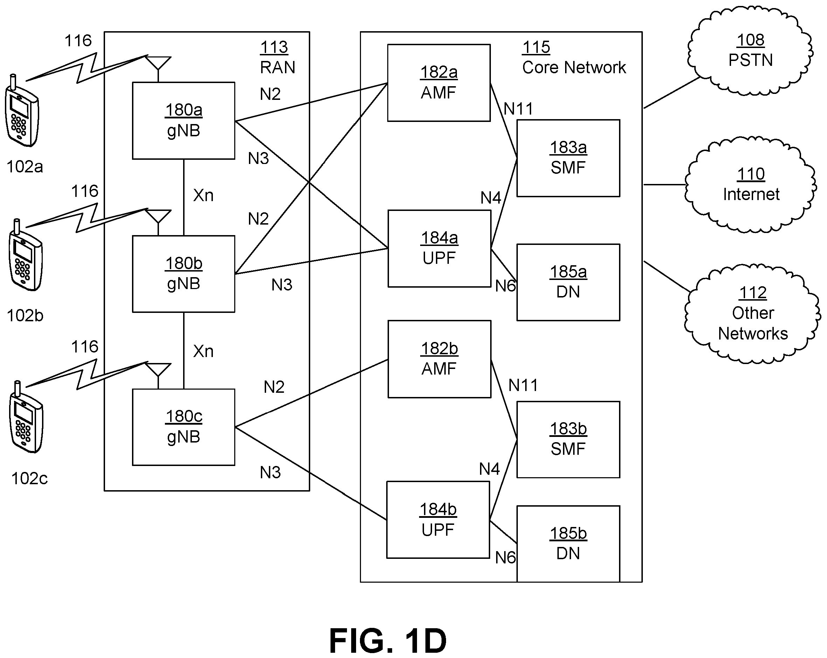

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

One or more non-orthogonal multiple-access (NOMA) schemes may be used. Benefits of non-orthogonal multiple access may include uplink (UL) link-level sum throughput and/or overloading capability, and/or system capacity enhancement (e.g., in terms of supported packet arrival rate at a system outage). New Radio (NR) may target UL non-orthogonal multiple access (e.g., for massive Machine Type Communications (mMTC)).

For non-orthogonal multiple access, there may be an interference(s) between transmissions using overlapping resources. As the system load increases, the interference(s) between transmissions for the non-orthogonal multiple access may be more pronounced. To combat the interference between non-orthogonal transmissions, transmitter side schemes (e.g., spreading, such as linear or non-linear, with or without sparseness) and/or interleaving may be employed, for example, to improve the performance and/or to ease the burden of advanced receivers.

Non-orthogonal transmission may be applied to grant-based and/or grant-free transmissions. The benefits of non-orthogonal multiple access (e.g., when enabling grant-free transmission) may include a variety of use cases or deployment scenarios (e.g., enhanced massive mobile broadband (eMBB), ultra-reliable low latency communication (URLLC), mMTC, etc.).

To enable a network receiver (e.g., a gNB receiver) to identify (e.g., uniquely identify) a WTRU and/or separate NOMA transmissions from different WTRUs, a multiple access signature (MAS) may be used. The MAS may be derived from one or more of the following: a codebook/codeword, a sequence, an interleaver, a resource element (RE) mapping, a demodulation reference signal (DMRS), a preamble, and/or a spatial dimension or power.

As provided herein, a MAS may be a multiple access signature, for example, to enable the WTRU to transmit in such a way that the WTRU's transmissions may be separable at a receiving entity, such as a network entity (e.g., where a gNB may be used as an illustrative example). For example, the WTRU's transmissions may be separable at the gNB from one or more other WTRUs' transmissions. A MAS may be used via a scrambler, an interleaver, power, modulation, etc., to enable the WTRU to transmit in such a way that the WTRU's transmissions may be separable at the gNB (e.g., separable at the gNB from transmission(s) from one or more other WTRUs). A MAS resource pool/set may be a set of MASs, for example, from which the WTRU may choose a MAS to transmit with. A MAS configuration may be used, for example, by the gNB to indicate (e.g., to a WTRU) the MAS resource pool/resource set or specific MAS to use and/or whether the MAS resource pool/set is periodic, aperiodic, or semi-static.

The operation of NOMA may require or benefit from designs and implementations, e.g., as provided herein. For example, MAS implementations and reliable MA detection may be provided herein.

MAS implementations may be provided. In a grant-free NOMA operation, WTRUs may initiate a transmission without a prior coordination. If a receiver cannot determine the identity of active users in a system, a WTRU may attempt to decode (e.g., exhaustively decode) one or more (e.g., all) users, for example, regardless of the users' actual activities. To reduce the receiver processing complexity, WTRUs may send respective indications with the WTRUs' NOMA transmission, for example, to declare the identities of the WTRUs, identify the MAS, and/or to allow the receiver to adjust. By awareness of the identities of active users, the receiver may adapt and/or avoid computations (e.g., excessive computations).

MAS implementations may be associated with one or more of the followings. MAS indications may entail implicit and/or explicit indication mechanisms. The explicit indication may include one or more (e.g., various) forms of signal and/or transmission design, for example, that may be provided herein. Given that there may be a limited multiplicity of MAS, a selection may be used to manage selection and assignment of MASs and/or to allow re-use of existing MASs.

A reliable MA detection may be provided. NOMA WTRUs may include different services that may have (e.g., require) different levels of reliability. The MAS and/or MA transmission techniques that are used may be able to modify the reliability of the MA detection, for example, to support the different reliability requirements.

Resources may be required for data transmission. Besides the resources required for the data transmission (e.g., the actual data transmission), resources may be associated with (e.g., defined for) MAS transmissions (e.g., the corresponding MAS transmissions). For example, MAS selection may be performed based on one or more parameters (e.g., characteristics) as described herein.

The MAS pool of resources may be divided into one or more groups, for example, based on one or more (e.g., different) parameters (e.g., characteristics). For example, a MAS pool may be divided based on orthogonality property, length, service, etc. MAS resource pool, MAS pool of resources, and MAS resource set may be used interchangeably herein.

A WTRU may be indicated or configured (e.g., dynamically or semi-statically) with information, for example, to determine the WTRU's assigned MAS resource pool (e.g., the MAS resource pool, information to determine the MAS resource pool, etc.). A set of resources for MAS, may be described by an index set P where P = {*p*₁, *p*₂, *..., p_{M}*}. An (e.g., each) index *pᵢ* may represent a set of other parameters. A WTRU may determine the MAS resource pool, for example, for a transmission through a set of parameters that may define the multiplicity of available configuration options for MAS resources. The MAS selection may be based on one or more forms of specific identification attributes (e.g., WTRU ID, Group ID, cell ID, service ID, etc.). For example, a MAS resource set may be defined by one or more values of a sequence index, length, seed, cyclic phase shift, etc.

According to the invention, a WTRU determines MAS based on a measurement (e.g., signal-to-noise ratio (SNR)). A WTRU may consider a pathloss, an interference, a size of the data payload, and/or service quality aspects of the data payload (e.g., reliability, latency, minimum data rate, and/or the like) to determine a MAS or a subset of MASs. The invention uses a MAS determined from a MAS set according to at least one of a reliability or a latency parameter.

A WTRU may determine a MAS or a subset of MASs for utilization (e.g., to be used with an associated transmission), for example, based on the service type and/or mobility condition. A WTRU may determine a MAS based on an indicated beam, for example, by a Downlink Control Information (DCI) of an scheduling request indicator (SRI) field (e.g., sounding reference signal (SRS) resource indicator). A WTRU may identify the MAS, for example, based on the WTRU's correlation property and/or the WTRU's robustness to timing errors. A WTRU may identify the MAS based on the WTRU's state of RRC connection (e.g., whether the WTRU is in the connected, idle, or inactive mode). A WTRU may determine MAS configuration directly from, or collectively in conjunction with, the WTRU's other information (e.g., transmission configuration information), such as one or more of the following: DMRS, SRS, channel state information-RS (CSI-RS), scheduled data resources, and/or the like.

A WTRU may be configured to have aperiodic access to a MAS resource, a MAS resource set, and/or a group of MAS resource sets.

A WTRU (e.g., or set of WTRUs) may be configured to have periodic access to a specific MAS resource, a specific MAS resource set, and/or a group of MAS resource sets. A WTRU may use a MAS resource set that may be indicated, e.g., through a RRC configuration and/or a dynamic signaling. The indicated MAS resource set may be valid (e.g., without time limitation), or may be valid for a duration (e.g., a specific duration) of a configured time, for example, indicated by a timer.

A WTRU may use a MAS that may not be used by another WTRU in the system (e.g., for grant-based transmission). The MAS definition may be RRC configured, dynamically configured, and/or may be valid for (e.g., only valid for) the duration of the transmission grant. A WTRU may use a MAS resource set that may be shared by one or more other WTRUs. A WTRU may select (e.g., autonomously select) a MAS, or the WTRU may be indicated or configured to determine a MAS.

A WTRU may select (e.g., autonomously select) a MAS, or the WTRU may be indicated or configured to determine a MAS. For example, in a grant-free transmission, a WTRU may select a MAS from the set of configured values without a coordination with a gNB (e.g., based on one or more parameters/characteristics, such as a NOMA zone, as described herein).

In a NOMA system with re-transmission(s), a MAS resource set for a (e.g., each) re-transmission may be associated with (e.g., may be defined), for example, based on one or more of the following parameters: load condition, mobility, service type, pathloss, indicated downlink beam, WTRU ID, WTRU group ID, cell ID, transmission index, etc.

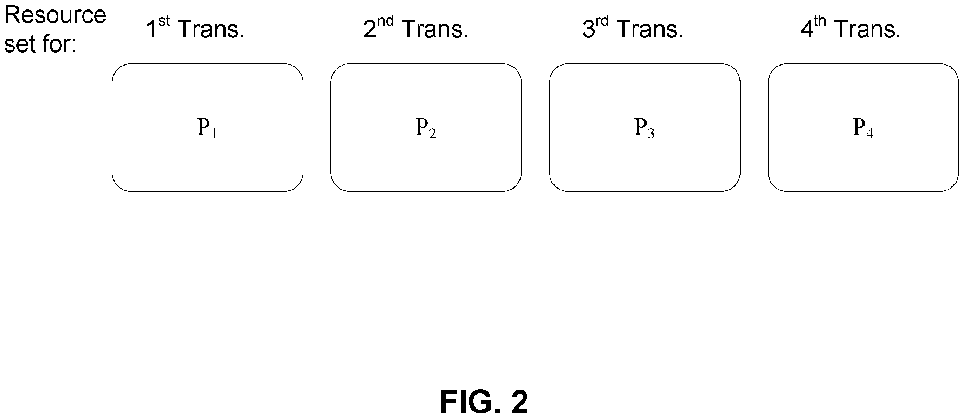

A WTRU may use a different set of MAS resources for a (e.g., each) HARQ transmission, for example, in a system with re-transmission(s). For example, a WTRU may utilize a different set of sequence indices, lengths, seeds, cyclic phase shifts, etc., per re-transmission. The indices may be divided into *M* ≤ *K* groups, for example, if K HARQ retransmissions are used. FIG. 2 shows an example resource set definition for a HARQ system with 4 transmissions. A (e.g., every) resource set shown by P*ᵢ*, may be defined as P*ᵢ* ⊆ P, where P*ᵢ* ∩ P*ⱼ* may not be { }. A (e.g., each) subset of resources assigned to a (e.g., each) retransmission may be orthogonal to other defined sets, for example, P*ᵢ* ∩ P*ⱼ* = { }. By detecting use of a MAS resource, the index of a retransmission may be determined. One or more sets of P may be used to define resources for MASs and/or DMRS. There may be two different sets of P*_{MAS}* and *P_{DMRS}* to define (e.g., independently define) resources for a (e.g., each) HARQ transmission. A WTRU may be configured with a different size of resources. The size of resource set for a (e.g., each) retransmission may be defined, for example, based on operating scenarios, such as system load condition, mobility, service type, etc. A WTRU may be configured with one or more initial resource sets, for example, for a (e.g., each) transmission. A WTRU may select additional resource sets and/or the WTRU may switch to other resources sets, for example, based on an operating condition. A WTRU may determine the resource set definition for a (e.g., each) re-transmission step, for example, based on the WTRU's ID, group ID, a cell ID configuration and/or the like. For a (e.g., each) retransmission, a WTRU may be configured with more than one set of MASs and/or DMRS resources. A WTRU may adjust the likelihood of successful MAS indication for a (e.g., each) retransmission, for example, by selecting a larger resource set. For example, a WTRU may use a resource set with more MAS or DMRS resources available for the WTRU's initial transmission, for example, to reduce the likelihood of MAS or DMRS collisions for the WTRU's first transmission. A WTRU may employ a resource set with more MAS or DMRS resources available for the WTRU's retransmissions, for example, to increase the likelihood of successful later transmission. A WTRU may adjust the power of MAS indication and DMRS transmission (e.g., may adjust the power of MAS indication and DMRS transmission independently), for example, depending on the stage of failure (e.g., whether the system is MAS-congested or DMRS-congested). A WTRU may be configured with time durations (e.g., two time durations *t₁* and *t₂* where *t₁*<*t₂*). A WTRU may interpret the transmission condition as a potential DMRS-congested, for example, if the WTRU did not receive a DCI to flush its buffer after expiring the configured duration of *t₁*. A WTRU may interpret the transmission condition as a potential MAS-congested, for example, if the WTRU did not receive a DCI to flush the WTRU's buffer after a configured duration of time *t₂*.

A WTRU may attempt to transmit its data by splitting it into multiple parallel layers or branches and may use different MA signatures per layer. A (e.g., each) NOMA layer may have a same or different modulation coding. A WTRU may be configured to use subsets (e.g., specific subsets) of MASs for multi-layer NOMA transmission. A WTRU may determine the MAS for a (e.g., each) layer based on a defined linkage (e.g., an a priori defined linkage), where each MAS may have been paired with a specific subset of other MASs. For example, MASs may be pre-defined (e.g., 24 pre-defined MASs for illustration). If MASs are pre-defined (e.g., 24 pre-defined MASs), a WTRU may determine its MAS for single layer MASs (e.g., MASs for single layer NOMA transmission), two layer MASs (e.g., MASs for two layer NOMA transmission), and/or four layer MASs (e.g., MASs for four layer NOMA transmission). A WTRU may determine its MAS for single layer MASs as follows: S1=*p1*, S2= *p2,* ..., S8=*p8*. The WTRU may determine its MAS for two layer MASs as follows: S9={*p9*, *p10*}, S10={*p11*, *p12},* S11={*p13*, *p14},* S12={*p15*, *p16*}*.* The WTRU may determine its MAS for four layer MASs as follows: S13={*p17*, *p18, p19, p20*}, S14={*p21*, *p22, p23, p24*}*.* A WTRU may indicate an index to declare its employed MAS set for transmission, e.g., irrespective of the number of layers in a NOMA transmission. The indicated index may serve as a NOMA layer indicator (NLI).

A NOMA WTRU may be configured with a specific NLI, e.g., a designated NLI. Per the configured NLI, a WTRU may re-use a particular MAS (e.g., *pi*) in different NOMA scenarios. For example, MASs may be pre-defined (e.g., with eight (8) pre-defined MASs for illustration). If MASs are pre-defined (e.g., with eight pre-defined MASs), a WTRU may determine its MAS. The WTRU may determine its MAS where the NLI is 1, as follows: S1=*p1*, S2= *p2,* ..., S8=*p8*. The WTRU may determine its MAS where the NLI is 2, as follows: S9={p1, *p2},* S10={*p3*, *p4*}, S11={*p5*, *p6*}, S12={*p7*, *p8*}. The WTRU may determine its MAS where the NLI is 4, as follows: S13={*p1*, *p2, p3, p4*}, S14={*p5*, *p6, p7, p8}.* A MAS *pi* may be reused and paired with different groups or sets of MASs based upon the configured NLI.

The NLI in retransmissions may be determined (e.g., implicitly determined) at a gNB by configuring a linkage between NLIs and ACK/NACK responses. A NACK may trigger the WTRU to switch to a different NLI for its retransmissions, where the switching order may be preconfigured by the linkage. Upon reception of a NACK, a WTRU may use a different number of layers for its retransmissions. For example, a WTRU may adopt a multi-layer NOMA transmission, and may select MASs from a set that is linked to the corresponding number of layers, e.g., NLI=2. The WTRU may proceed with its multi-layer layer transmission. A WTRU may maintain its transmission with the same number of layers, e.g., if the WTRU receives an ACK from a gNB. A WTRU may reduce the number of layers for re-transmission, and may select a MAS according to the updated number of layers, e.g., NLI=1, if the WTRU receives a NACK from the gNB. Depending on traffic type, network load, etc., a WTRU may adopt an alternate approach (e.g., opposite approach) in adapting the number of layers, e.g., it may increase the number of layers.

A scheduling request (SR)-based MAS Indication may be provided. For example, a SR may be used for MA signature transmission for NOMA. One or more (e.g., different) SRs may be used to indicate signature subsets (e.g., different MA signature subsets). For example, two SRs may be used. SR-1 may be used to indicate the MA signature subset #A. SR-2 may be used to indicate the MA signature subset #B. Different SRs may be associated with different MA signature subsets, for example, so that by sending SR, a gNB may be able to learn which MA signature subset that the WTRU may select (e.g., randomly select) the WTRU's signature from, and/or transmit the selected MA signature. More than two SRs may be used. SR-k may be associated with the MA signature subset #k, where k = 1, 2, 3, ..., K. K may be a design parameter. For example, K may depend on how the MA signature pool may be partitioned and/or how many subsets may be available after partitioning.

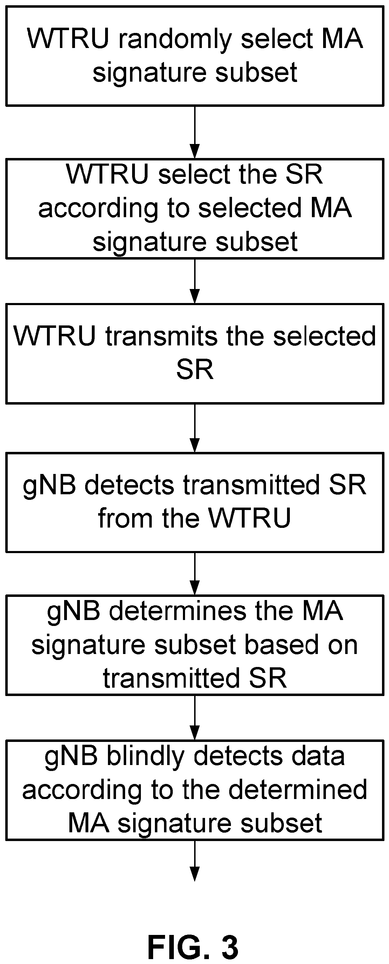

WTRU and/or gNB features may be provided. An example MA signature subset implementation is shown on FIG. 3. A WTRU may select (e.g., randomly select) a MA signature subset. The WTRU may select the SR, for example, according to the selected MA signature subset. The WTRU may transmit the selected SR. The gNB may detect the transmitted SR from the WTRU. The gNB may determine the MA signature subset based on the transmitted SR. The gNB may detect (e.g., blindly detect) data, for example, according to the determined MA signature subset.

A NOMA indication(s) and/or a MAS indicator transmission(s) may be provided. For example, a WTRU may determine a NOMA transmission zone and/or a region based on one or more of specific time and/or frequency resources. NOMA zone and NOMA region may be used interchangeably. A NOMA zone may include time and/or frequency resources for a data transmission (e.g., the actual NOMA data transmission) and/or other supporting transmissions (e.g., MAS and/or DMRS).

A MAS indicator transmission may be performed, for example, prior to or in the same time (e.g., time slot) as the NOMA payload transmission. In the case of an advance transmission, a WTRU may transmit the WTRU's MAS indicator in one or more earlier period(s) (e.g., symbols and/or slots), for example, that may be followed by the transmission of the NOMA payload.

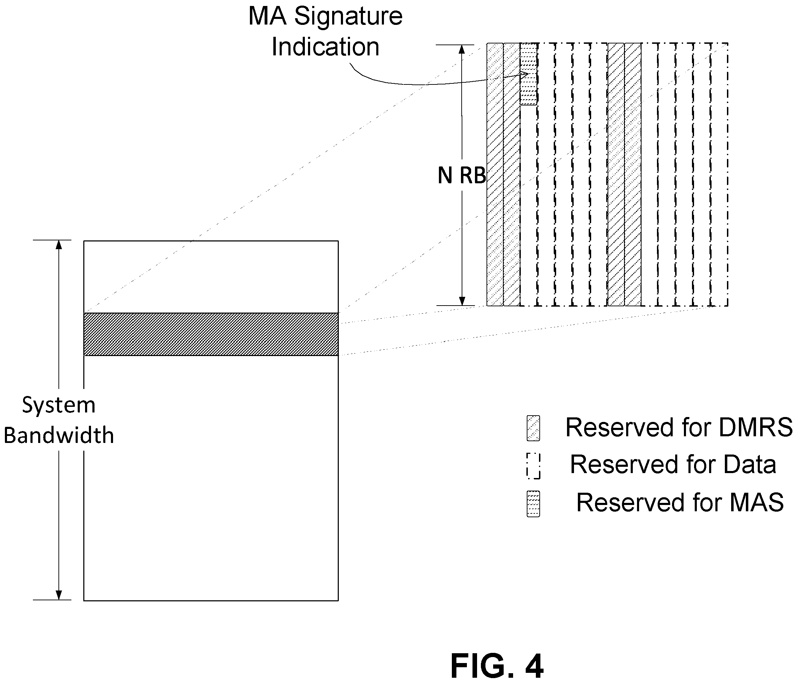

A MAS indicator transmission may be separate or independent from a DMRS transmission and/or from a NOMA payload. As shown in FIG. 4, the MAS indicator may be transmitted in a different zone than the DMRS transmission and/or NOMA payload. For example, one or more of the following may be implemented: the transmission of a MAS indicator may be different from the actual NOMA payload; the MAS indicator may be transmitted (e.g., may always be transmitted) on a predefined, dynamically indicated, and/or configured location; the transmission of a MAS indicator may be based on a transmission of one or more sequences (e.g., short orthogonal or pseudo-orthogonal sequences); and/or a MAS indicator transmission may be implanted with the DMRS transmission and/or the NOMA payload.

The transmission of a MAS indicator may be different from the actual NOMA payload. A MAS indicator transmission may be based on an orthogonal transmission protocol and/or the MAS indicator transmission may be based on a NOMA transmission scheme that may be different from the NOMA scheme used for transmission of the actual payload.

The MAS indicator may be transmitted (e.g., may always be transmitted) on a predefined, dynamically indicated, and/or configured location. A WTRU may select a MAS indicator mapping autonomously. A WTRU may use the same (e.g., may always use the same) RE set location for MAS indicator transmission and/or may hop across the NOMA zone.

The transmission of a MAS indicator may be based on a transmission of one or more sequences (e.g., short orthogonal or pseudo-orthogonal sequences, such as length-2 Walsh-Hadamard orthogonal cover codes ([+1 +1], [+1, -1])). A WTRU may use one or more of the following: a resource block (RB) to transmit a sequence (e.g., a length-12 sequence); one or more RBs to transmit multiple sequences (e.g., multiple sequences of length 12); two or more RBs to transmit sequences, for example, sequences longer than length-12; and/or RBs (e.g., additional RBs) to transmit the WTRU's sequence set.

A WTRU may use an RB to transmit a sequence (e.g., a length-12 sequence). A WTRU may apply different cyclic shift parameters to a sequence (e.g., the same sequence) and/or the receiver, for example, to identify the WTRU.

A WTRU may use one or more RBs to transmit multiple sequences (e.g., multiple sequences of length 12) with the same or different values of cyclically shifted versions of a mother sequence.

A WTRU may use two or more RBs to transmit sequences, for example, sequences longer than length-12. For example, a WTRU may transmit one or more sequences with lengths of 18, 24, and/or 36 subcarriers. A WTRU may select one or more related parameters, e.g., cyclic shift, root, etc. The WTRU may transmit one of the sequences on the available time or frequency resources.

A WTRU may use RBs (e.g., additional RBs) to transmit the WTRU's sequence set. For example, a WTRU may use the index/indices of the RBs used to transmit the sequence and/or the related parameters of the mother sequence may be used to indicate the WTRU's identity.

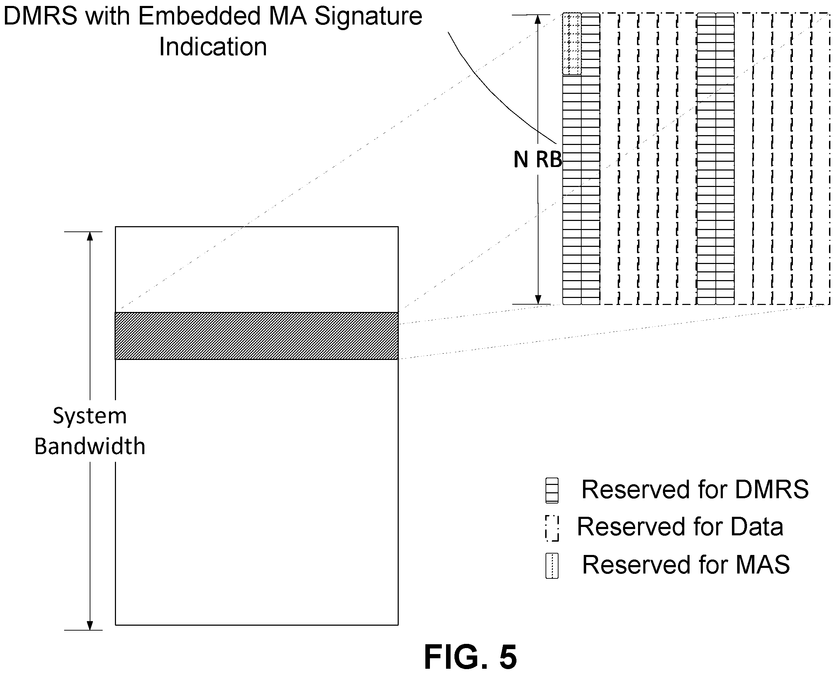

A MAS indicator transmission may be implanted with the DMRS transmission and/or the NOMA payload. For example, as shown in FIG. 5, the MAS indication may be through the DMRS transmission. The transmission of a MAS indicator may be based on transmission of one or more sequences (e.g., relatively long orthogonal or pseudo-orthogonal sequences), for example, to serve as a DMRS and/or a MAS indication.

NR may comprise two types of configurations that are supported for a DM-RS transmission for OFDM. For example, configurations may be extended to support more than 8 ports for configuration 1 and more than 12 ports for configuration 2 (or 8/12 WTRUs) by generating sequences (e.g., new sequences) as follows: by applying cyclic shifts to the original 8/12 sequences and/or by using mother sequences (e.g., one or more other pseudo-random noise (PN )sequences and/or other Zadoff-Chu sequences, for example, with different root indices).

A WTRU may use one or more of the following: the frequency location of the DM-RS, the sequence index, and/or the cyclic shift; a combination of independent and DMRS-based MAS indications; and/or a sequence-based DMRS.

A WTRU may use the frequency location of the DM-RS, the sequence index, and/or the cyclic shift, for example, to indicate the WTRU's identity.

A WTRU may use a combination of independent and/or DMRS-based MAS indications. A WTRU may determine the independent and/or DMRS-based MAS indications, for example, based on the allocation size. For example, if the resource allocation is small (e.g., 2 RBs), the WTRU may not use the NR DMRS configuration for the MAS indication. If the allocation size is small, one or more of the following may be used: a WTRU may use DMRS with a reduced density to indicate MAS; and/or a WTRU may use a short sequence to indicate the MAS. A WTRU may use DMRS with a reduced density, for example, to indicate MAS. For example, in NR DMRS Configuration 1, one or more (e.g., every) third subcarrier may be used by a WTRU (e.g., rather than every other subcarrier). In NR DMRS Configuration 2, a WTRU may use 2 (e.g., only 2) subcarriers in an RB (e.g., rather than 4 subcarriers). A WTRU may use a short sequence to indicate the MAS.

A WTRU may use a sequence-based DMRS. For example, a DMRS sequence may cover the transmission bandwidth (e.g., most or the entire transmission bandwidth). The DMRS sequence's length may be similar (e.g., equal) to the number of the subcarriers in the allocated bandwidth.

Indicators (e.g., generalized indicators) for NOMA may be provided. For example, on transmission of the NOMA payload, a WTRU may transmit a NOMA indicator, for example, an accompanying NOMA indicator including one or more of the parameters used in a NOMA transmission to assist a network (e.g., a gNB) in decoding the MA/payload. The indication may be transmitted in one or more of the following: transmitted independently of the MAS in a separate resource (e.g., similar to the MAS indication shown in FIG. 4); and/or embedded with one or more of the components of the NOMA transmission (e.g., similar to the MAS indication shown in FIG. 5)

The indicator may be transmitted independently of the MAS in a separate resource, for example, similar to the MAS indication shown in FIG. 4. The indicator may be transmitted in the same NOMA transmission region, for example, an NR slot or a NOMA Zone. The indicator may be transmitted in a position before, at the same time, or after the NOMA transmission. The indicator may be transmitted in a different NR region, for example, in an NR slot or NOMA Zone. The indicator may be transmitted before or after the NOMA zone including the NOMA transmission.

The indicator may be embedded with one or more of the components of the NOMA transmission, for example, the DMRS, the WTRU identity, and/or the MAS signature itself (e.g., similar to the MAS indication shown in FIG. 5).

A WTRU may send a NOMA indicator that may include one or more parameters/characteristics related to the WTRU's NOMA transmission. For example, one or more of the following parameters/characteristics may be transmitted: the WTRU identity; the DMRS index; and/or the MAS indices. The WTRU identity may be transmitted, and the WTRU identity may enable the gNB to assign the decoded transmission to the correct WTRU. The DMRS index may be transmitted, and the DMRS index may enable the gNB to identify the DMRS used and/or estimate the channel for the WTRU for decoding. The MAS indices may be transmitted, and the MAS indices may enable the gNB to identify the one or more MAS parameter/characteristics used (for example, the scrambling sequence and/or interleaving pattern) and/or separate the WTRU from the other NOMA WTRUs.

The contents of the NOMA indicator may be determined by the WTRU, for example, by the relationship between the parameters that are sent to the gNB. If there is a one-to-one mapping between multiple parameters, a parameter (e.g., one single parameter) may be sent (e.g., explicitly sent) to the gNB, for example, to represent the multiple parameters and/or other parameters may be derived implicitly. If there is a one-to-many or many-to-many mapping between the parameters, a parameter may be sent (e.g., explicitly sent) to the gNB for each of the multiple parameters. If a one-to-one mapping exists between the WTRU identity, the DMRS index, and the MAS, the NOMA indicator may include one or more (e.g., only one) of the parameters. If a one-to-many mapping exists between the WTRU identity and the DMRS index and if a one-to-one mapping exists between the DMRS and the MAS, the NOMA indicator may include elements (e.g., up to two elements). For example, the NOMA indicator may include one of the DMRS or WTRU identity and/or the MAS used. If a many-to-many mapping exists between the WTRU identify, the DMRS index, and the MAS, the NOMA indicator may include elements (e.g., up to three elements). For example, the WTRU may include the identity, the DMRS index, and/or the MAS. In a multi-step identification, the gNB may identify the explicit parameter and (e.g., based on the possible mapping) use the parameter to identify the specific implicit parameter, and/or blindly identify the subset of implicit parameters to be used (e.g., orthogonal multiple-access (OMA) WTRU ID with a NOMA secondary sequence indicating DMRS and/or MAS sequence).

The NOMA indicator may be configured (e.g., explicitly or implicitly) by the gNB. The NOMA indicator may be pre-determined. The NOMA indicator transmitted by the WTRU may be configured (e.g., configured explicitly) by the gNB. For example, if the gNB supports multiple NOMA schemes with different MASs, the gNB may explicitly configure the contents of the NOMA signature during the setup of the NOMA scheme. The NOMA indicator transmitted by the WTRU may be configured implicitly by the gNB. For example, if the gNB supports multiple NOMA schemes with different MASs, the configuration of the WTRU to a specific NOMA scheme may implicitly setup the contents of the NOMA indicator contents.

The NOMA indicator may be transmitted in the NOMA indicator resource using OMA. In OMA, the indicator from a (e.g., each) WTRU may be transmitted in an orthogonal manner, for example, to the indicator for one or more other WTRUs. The WTRU may use one or more of orthogonal time, frequency, and/or code resources that may be configured by the gNB.

The NOMA indicator may be transmitted in the NOMA indicator resource using NOMA. In NOMA, the indicator from a (e.g., each) WTRU may be transmitted in a non-orthogonal manner to the indicator for one or more other WTRUs. The WTRU may use one or more of non-orthogonal time, frequency, and/or code resources that may be configured by the gNB.

A WTRU may determine, or may be configured with, dedicated physical uplink control channel (PUCCH) resources for MAS indication. The dedicated resources may be in addition to the regularly configured PUCCH resources. The dedicated resources may be a subset of the already defined PUCCH resources. A NOMA WTRU may use available PUCCH resources for a NOMA-related indication. A WTRU may be configured with additional PUCCH-like resources for a NOMA-related indication to distinguish or separate its PUCCH transmission that may be used for uplink control information (UCI) indication from NOMA-related indications.

A PUCCH transmission described herein may be or may include to a transmission mechanism that may be based on NR PUCCH transmission, or to a PUCCH-like transmission that follows one or more, but not all, principles of PUCCH transmission. The UCI described herein may be or may include a content (e.g., a regular content) of NR PUCCH, such as ACK/NACK, CSI, etc.

A NOMA WTRU may utilize PUCCH resources indefinitely and/or may be configured to utilize PUCCH resources for a limited duration in a semi-persistent manner for NOMA transmission. A NOMA WTRU may not need a scheduling grant to indicate its MAS through a PUCCH-like transmission. The configured resources for MAS indication may be different from the configured resources for PUCCH resources. For NOMA-related transmission, a WTRU may assume a priority rule based on the NOMA traffic type (e.g., URLLC, mMTC, etc.) versus UCI content (e.g., ACK/NACK, CSI, etc.). In examples, a WTRU may drop its MAS indication transmission if the gNB has scheduled the WTRU for transmission of a UCI, e.g., ACK/NACK, SR, etc. In examples, a WTRU may proceed with its NOMA-related indication if the scheduled UCI transmission is CSI, etc.

The indicated information (e.g., NOMA indication) may indicate one or more of the following information: MAS; duration of NOMA transmission; NOMA time/frequency resources; number of layers; WTRU identification; modulation and coding; bandwidth part; and/or the like. The indication event may occur at the beginning of a NOMA transmission, and may hold valid for an expected duration of the NOMA transmission.

PUCCH transmission based on, for example, format 0 and/or 2 may be utilized for NOMA indication (e.g., MAS indication). The configured PUCCH resources may be defined per group of NOMA WTRUs. A WTRU may assume one or more of PUCCH resources for NOMA-related indications. A WTRU may use (e.g., simultaneously use) one or more PUCCH resources for additional reliability.

A WTRU may indicate its NOMA indication, e.g., MAS, by using PUCCH format 0, where the transmitted two (2) bits of information may indicate a sub-set of MASs, and the configured base sequence may represent the specific MAS within the sub-set. The configured base sequence may indicate a sub-set of MASs, and the transmitted two (2) bits of information may represent the specific MAS within the sub-set. A WTRU may use spatial relation information (e.g., the same spatial relation information) as indicated for PUCCH resources. If a WTRU assumes a same set of PUCCH resources for NOMA-related indication, the WTRU may be configured to use a subset of its resources or parameters (e.g., transmitted sequence only for NOMA indication), and may use the remaining set of resources or parameters for UCI indication.

A WTRU may indicate its MAS by using PUCCH format 2, where the transmitted information bits may indicate one or more of the following information: MAS; NOMA time/frequency resources; number of layers; WTRU identification; modulation and coding; bandwidth part; and/or the like. A WTRU may assume spatial relationship information (e.g., same spatial relation information) for MAS indication by PUCCH format 2 as the actual NOMA transmission, and may re-use PUCCH format 2 DMRS for its transmission. A WTRU may do so, for example, if PUCCH-like resources are relatively close to the NOMA resources in time and frequency. If a WTRU assumes a same set of PUCCH resources for NOMA-related indication, the WTRU may be configured to use a subset of its resources or parameters (e.g., transmitted sequence only for NOMA indication), and may use the remaining set of resources or parameters for UCI indication. A WTRU may use a NOMA-RNTI to assist a gNB in differentiating between NOMA-related content and UCI.

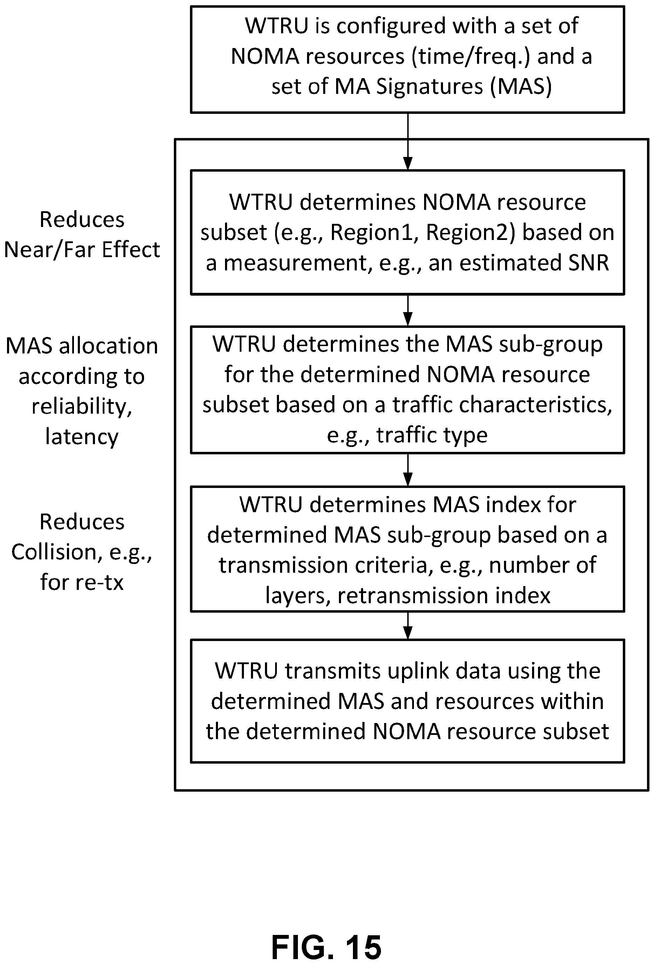

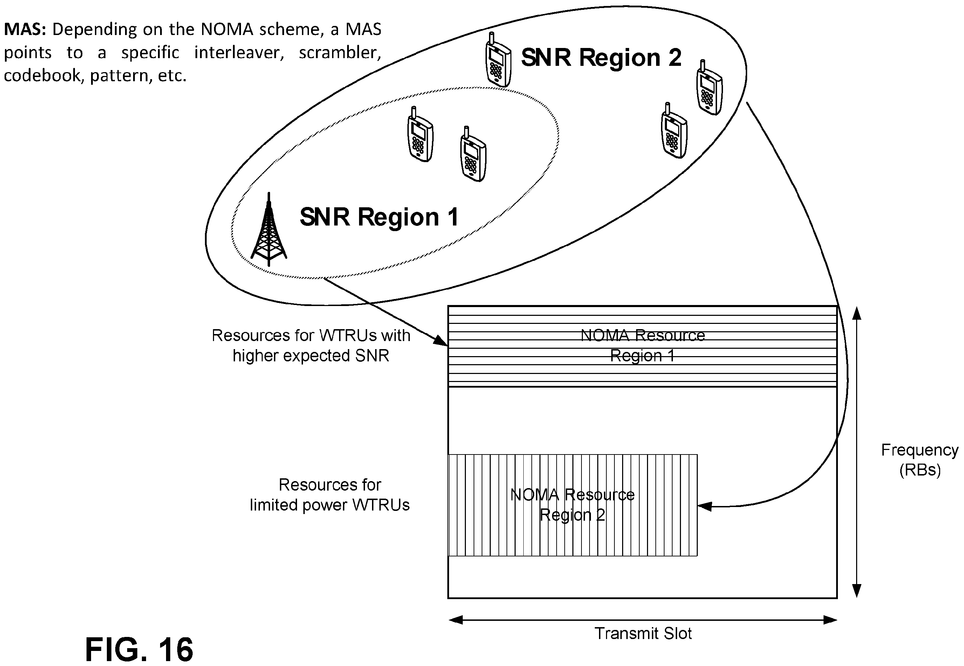

A WTRU may transmit a NOMA transmission based on one or more payload parameters/characteristics. For example, WTRUs may have NOMA payloads (e.g., different NOMA payloads) with characteristics (e.g., different characteristics/parameters) that may use (e.g., require) modifications to the NOMA transmission (e.g., NOMA zone to use, etc., as described herein), for example, to optimize the NOMA transmission based on the characteristics (e.g., parameters). Examples of the characteristics/parameters may include one or more of the following: levels of reliability; block error rate (BLER) targets; latency requirements; SNRs (e.g., measured SNR); and/or geographical distribution of STAs (e.g., near vs far WTRUs, etc., where near WTRUs may be associated with a first NOMA zone and far WTRUs may be associated with a second NOMA zone as shown in exemplary FIGs. 15 and 16).

The characteristics (e.g., parameters) may be associated with (e.g., defined as) the NOMA payload service class. The service class specific technique used (e.g., to improve the reliability of the transmission) may be configured by a network (e.g., a gNB), autonomously selected by a WTRU, or both. For example, a WTRU may be configured by the gNB using one or more of the techniques to increase the reliability of a NOMA transmission. A WTRU may select (e.g., autonomously select) one or more of the techniques to increase the reliability of a NOMA transmission. The gNB may configure the WTRU with techniques. The WTRU may select (e.g., autonomous select) complementary techniques to the gNB configuration. The WTRU may override a gNB configuration. The WTRU may indicate the change in the configuration to the gNB in an accompanying NOMA indicator, e.g., if the WTRU autonomously select complementary techniques to the gNB configuration and/or if the WTRU overrides a gNB configuration.

The WTRU may adapt the reliability of the MAS/data payload transmission by one or more of the following. A WTRU may select the repetition rate for transmission of the MAS and/or data payload. For example, the repetition rate for MAS and/or data payload may be different. A WTRU may select data coding rate and/or rate matching for transmission of the data payload. A WTRU may determine a MAS with one or more specific features. For example, a WTRU may determine a MAS that is more robust to inter-user interference, for example, for improved separability between the WTRUs. A WTRU may adjust DMRS transmission parameters for channel estimation (e.g., to improve channel estimation). The increase in the density of the DMRS in time and frequency may result in increased reliability, for example, for orthogonal DMRS used in NOMA transmission. For non-orthogonal DMRS used in a NOMA transmission, a reduction in the number of non-orthogonal DMRSs used and/or the use of a DMRS that is more robust to an inter-sequence interference may result in an increased reliability.

A WTRU may be assigned with NOMA resources e.g., by a network. The NOMA resources may include a NOMA zone(s). The WTRU may select the zone (e.g., NOMA zone) for a NOMA transmission, for example, based on the service class of the traffic to be transmitted. A WTRU may implement one or more of the following. A WTRU may be configured by the gNB with one or more NOMA zones where a NOMA zone may be mapped to one or more service classes. On arrival of data at the WTRU for transmission to the gNB, the WTRU may identify (e.g., determine) a parameter(s)/characteristic(s) (e.g., a transmit parameter(s)/characteristic(s)). A WTRU may select (e.g., determine) a NOMA zone(s) based on the parameter(s)/characteristic(s), such as service class identification. A WTRU may select (e.g., determine) a parameter(s)/characteristic(s) (e.g., DMRS index, the MAS, and/or the MAS indicator) for the NOMA transmission based on the selected NOMA zone. A WTRU may transmit the NOMA transmission (e.g., an uplink NOMA payload) to the gNB in the determined/selected NOMA zone using a NOMA parameter(s) (e.g., a NOMA characteristic(s)). A WTRU may listen for a downlink transmission from the gNB to indicate if the transmission was successful (ACK), unsuccessful (NACK), or unknown.

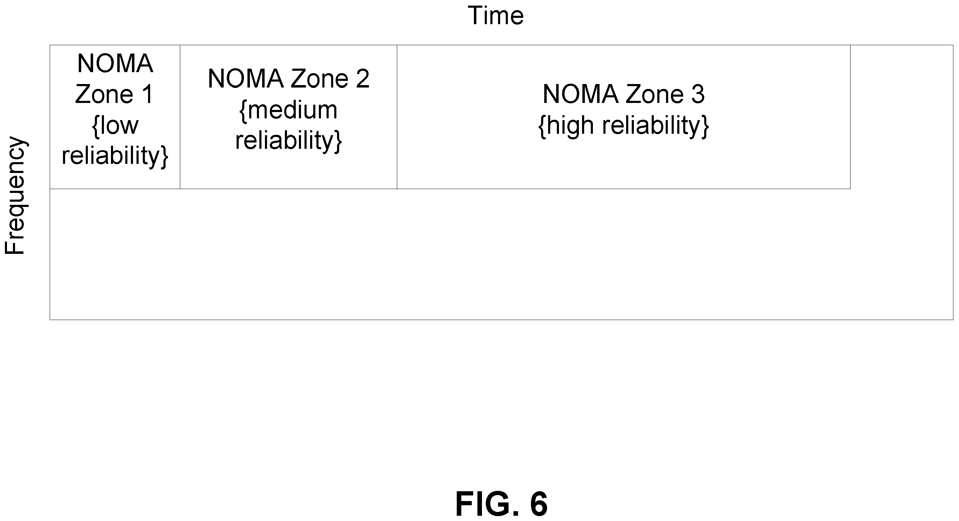

A WTRU may be configured by the gNB with NOMA resources, such as NOMA zone(s), where a (e.g., each) NOMA zone may be mapped to one or more service classes. A NOMA zone may be a set of time-frequency resources dedicated for a NOMA transmission, for example, as illustrated in the FIG. 6 (where three NOMA zones are shown within the time (T)-frequency (F) transmission resources) and/or in FIGs. 15-16. For example, as shown in FIG. 6, a first NOMA zone (e.g., NOMA zone 1) may be associated with a low reliability service class for the NOMA transmission, a second NOMA zone (e.g., NOMA zone 2) may be associated with a medium reliability service class for the NOMA transmission, and/or a third NOMA zone (e.g., NOMA zone 3) may be associated with a high reliability service class for the NOMA transmission.

On arrival of data at the WTRU for transmission to the gNB, the WTRU may identify (e.g., determine) transmit parameters (e.g., transmit characteristics). The transmit parameters (e.g., transmit characteristics) may include the service class, such as reliability, latency, and/or the like, of the data to be sent. In examples, the WTRU may identify the service class of data as low reliability, medium reliability, and/or high reliability. In examples, the WTRU may identify the service class as suitable for one or more MASs, for example, as suitable as a low power or high power WTRU in a power domain NOMA transmission.

The WTRU may select (e.g., determine) one or more of the NOMA zones, for example, based on the parameters (e.g., transmit parameters/transmit characteristics), such as service class identification. If a WTRU has traffic from multiple service classes (e.g., to send), the WTRU may send the information (e.g., all the information) in the zone for a service class (e.g., a single service class, such as the most restrictive service class). If a WTRU has traffic from multiple service classes to send, the WTRU may send the traffic for a service class in the WTRU's assigned NOMA zone for the service class (e.g., each service class). The WTRU may send the traffic for a service class in the WTRU's assigned NOMA zone (e.g., for each service class). For example, the WTRU may send the traffic for a service class in the WTRU's assigned NOMA zone (e.g., for each service class) when the NOMA zones are at the same time. For example, the WTRU may send the traffic for a service class in the WTRU's assigned NOMA zone (e.g., for each service class) when the NOMA zones are at different times.

The WTRU may select (e.g., determine) parameters/characteristics for the NOMA transmission based on the selected NOMA zone. Parameters/characteristics for the NOMA transmission may include one or more parameters/characteristics of the DMRS index, the MAS, and/or the MAS indicator. Parameters and characteristics described herein may be used interchangeably.

The WTRU may transmit the uplink NOMA payload to the gNB in the NOMA zone, for example, using one or more NOMA parameters/characteristics described herein. The WTRU may transmit a NOMA indicator (e.g., accompanying NOMA indicator).

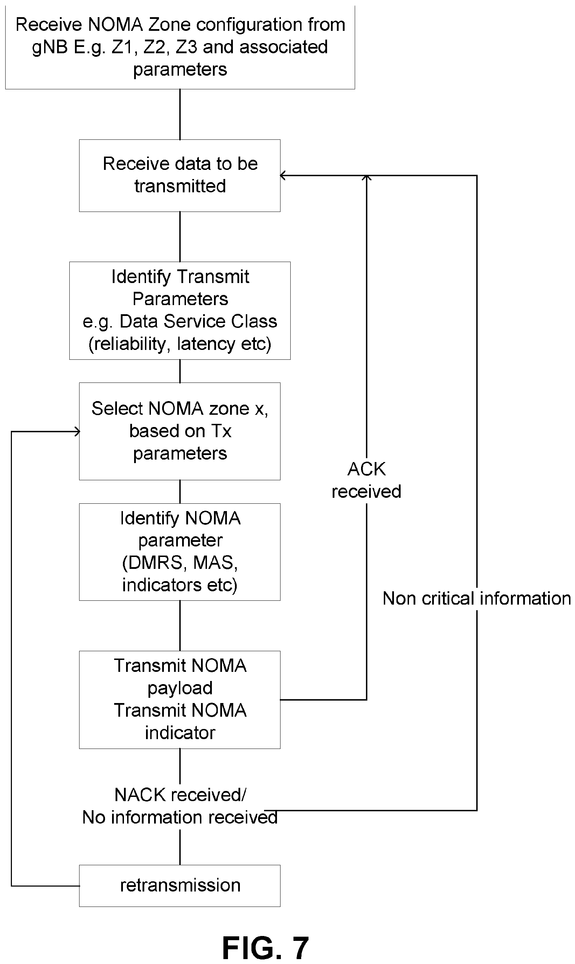

The WTRU may listen for a downlink transmission from the gNB, for example, to indicate if the transmission was successful (ACK), unsuccessful (NACK), or unknown (e.g., no receipt of a packet from the gNB). If the transmission is successful (e.g., ACK), the NOMA transmission may end. If the transmission is unsuccessful (e.g., NACK or unknown), the WTRU may do one or more of the following. The WTRU may end the transmission if the information is not critical (e.g., information from an IOT device). The WTRU may retransmit the information in one or more other NOMA zones, for example, that support data with the same service class and/or in one or more NOMA zones dedicated for NOMA retransmissions. The WTRU may receive a gNB grant identifying dedicated resources, for example, for transmission of the information. Switching from a NOMA transmission to a dedicated OMA transmission may be used for a high reliability service class that may have failed. An example WTRU implementation for NOMA transmission as described herein is shown on FIG. 7 and/or similarly shown in FIG. 15.

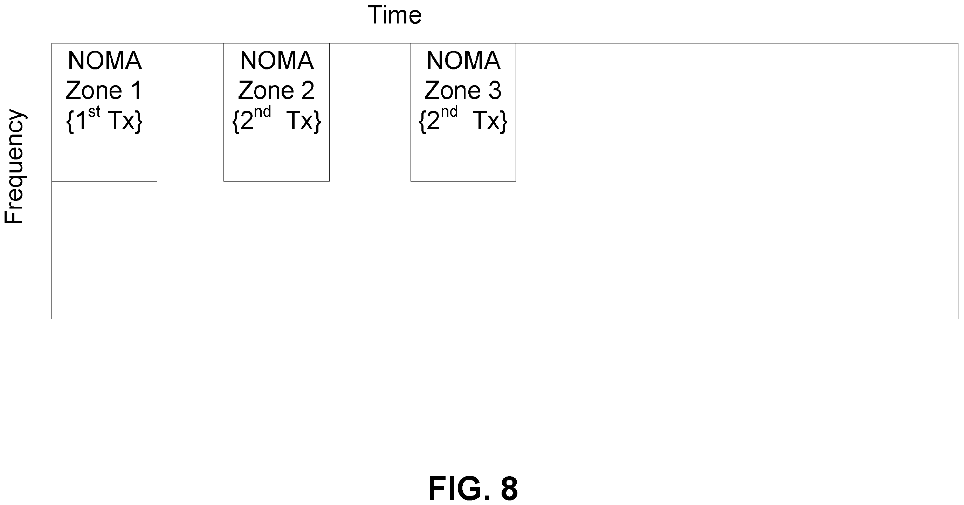

A WTRU may be configured (e.g., from a network) with one or more NOMA zones (e.g., sets of NOMA resources). A NOMA zone may be configured with a similar (e.g., the same) reliability. The number of NOMA zones that the WTRU may transmit in (e.g., for a service class) may depend on the reliability, for example, as shown in FIG. 8 (where three NOMA zones are defined). The reliability of the traffic may be determined by the number of zones that the WTRU transmits in.

The number of NOMA zones in which a WTRU may be configured may depend on the service class. For example, if a service class is defined by the reliability, a WTRU may be configured with a repetition(s) based on the reliability. A WTRU may be configured with one repetition for a low reliability NOMA, two repetitions for a medium reliability NOMA, and/or three repetitions for a high reliability NOMA.

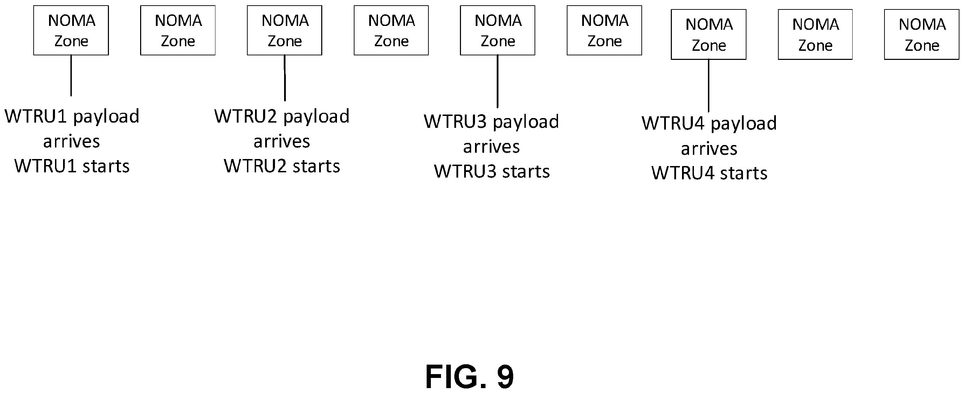

A NOMA WTRU may be configured to start a transmission (e.g., a new NOMA transmission). In examples, a NOMA WTRU may be configured to start a NOMA transmission at any time (e.g., a NOMA time slot or a NOMA zone). For example, as shown in FIG. 9, a NOMA WTRU may start at any NOMA zone (e.g., in case an interference(s) changes for a WTRU). As shown in FIG. 9, a WTRU may transmit within a NOMA zone after traffic to be transmitted arrives. In examples, a NOMA WTRU may be configured to start a NOMA transmission at a time (e.g., fixed time). For example, the time may stay constant once a NOMA set is formed (e.g., a set of WTRUs in a NOMA transmission).

One or more WTRUS (e.g., four WTRUs, such as WTRU1, WTRU2, WTRU3, and WTRU4) may be illustrated as an example in FIG. 9, in a system. A WTRU may transmit in a NOMA zone. The zone may support up to three WTRUs. WTRU1 may use (e.g., require) three repetitions, WTRU2 and WTRU5 may use (e.g., require) two repetitions, and/or WTRU3 and WTRU4 may use (e.g., require) one repetition. The following WTRUs may transmit using NOMA zone(s). WTRU1, WTRU2, and/or WTRU3 may transmit using NOMA Zone 1. WTRU1, WTRU4, and/or WTRU5 may transmit using NOMA Zone 2. WTRU1, WTRU2, and/or WTRU5 may transmit using NOMA Zone 3. WTRU1 may repeat its transmission three times and/or may be interfered with by a set (e.g., a different set) of WTRUs. Reliability may be obtained by decoding three times in the presence of different interferers. Similarly, WTRU2 and/or WTRU 5 may repeat its transmission two times (e.g., to obtain reliability by decoding two times in the presence of different interferers). The repetitions (e.g., number of repetitions) for the WTRU described herein is provided as examples and may change.

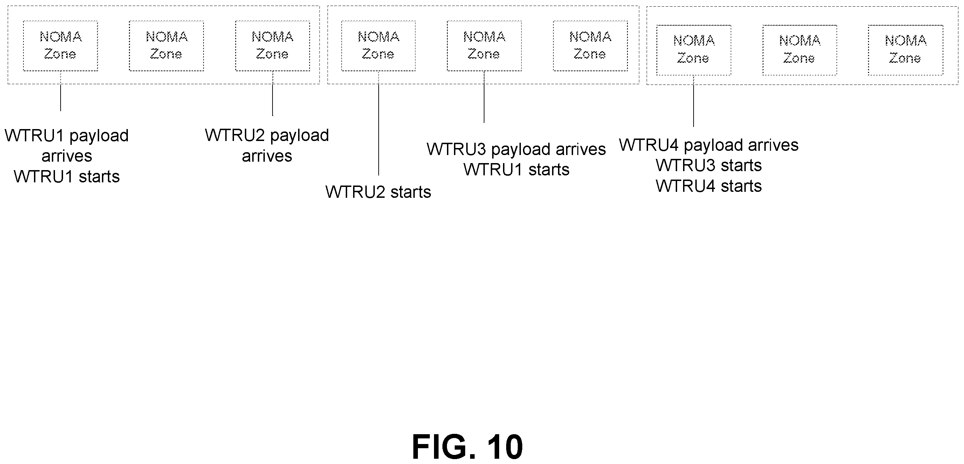

A NOMA WTRU may be configured to start a NOMA transmission (e.g., a new NOMA transmission) at fixed times (e.g., a fixed time slot or a fixed NOMA zone). The fixed times may be configured by a gNB. FIG. 10 illustrates an example of a WTRU starting transmission at fixed NOMA zones (e.g., fixed NOMA zones may be shown in dotted box).

A WTRU may delay transmission on arrival of a NOMA payload, for example, until the WTRU is synchronized with the allowed transmission resources. For example, three WTRUs (e.g., WTRU1, WTRU2, and WTRU3) may be provided. WTRUs that are repeating transmissions (e.g., only WTRUs that are repeating transmissions) may transmit in the subsequent zones. The group of interfering STAs may be the same or may be reduced. For example, the following WTRUs may transmit using NOMA zone(s). WTRU1, WTRU2, and/or WTRU3 may transmit using NOMA Zone 1. WTRU1 and/or WTRU2 may transmit using NOMA Zone 2. WTRU1 may transmit using NOMA Zone 3. The WTRU may transmit one or more repetitions and may result in a reduction of interference(s) (e.g., interferer(s)) with a (e.g., each) retransmission and a subset of the same interference(s) (e.g., interferer(s)). The WTRU may receive an ACK from the gNB, for example, after receiving (e.g., successfully receiving) the NOMA transmission and/or may truncate the retransmissions. If WTRU1 is successfully decoded in Zone 2, the resources for Zone 3 (e.g., originally assigned for WTRU1 transmission) may be re-purposed for non-NOMA transmission and/or a new set of NOMA zones may be configured based on DL L1 signaling.

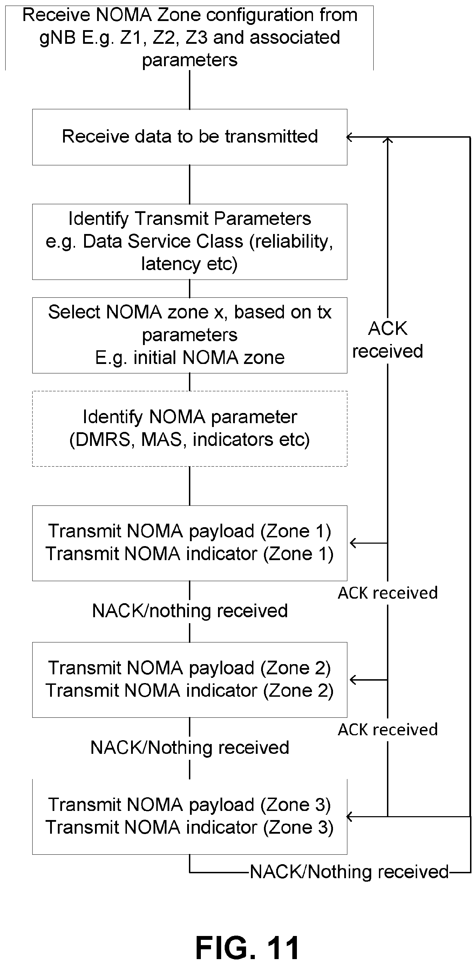

FIG. 11 illustrates an example NOMA transmission using a NOMA zone with similar (e.g., identical) reliabilities. A WTRU may perform one or more of the following: a WTRU may be configured with a gNB defining NOMA zone(s); on data arrival at the WTRU for transmission (e.g., to the gNB), the WTRU may identify transmit parameters/characteristics (e.g., the service class, such as one or more of reliability, latency, etc.) of the data to be sent; the WTRU may start transmission at the initial zones for NOMA transmission (e.g., based on the service class of the WTRU allowed); the WTRU may select parameters/characteristics for the NOMA transmission (e.g., based on the selected NOMA zone); the WTRU may transmit the uplink NOMA payload to the gNB in the NOMA zone using NOMA parameters/characteristics (e.g., the appropriate NOMA parameters/characteristics); and/or the WTRU may listen for a downlink transmission from the gNB, for example, to indicate if the transmission was successful (ACK), unsuccessful (NACK), or unknown (e.g., no receipt of a packet from the gNB).

A WTRU configured by a gNB may define one or more NOMA zones (e.g., one or more different NOMA zones). One or more NOMA zones may be configured with a similar (e.g., the same) reliability. The number of NOMA zones in which the WTRU may transmit (e.g., for a specific service class) may depend on the reliability, as illustrated in FIG. 8 (where three NOMA zones are defined). The WTRU may be configured with the NOMA zones for initial transmission, for example, for one or more (e.g., all) NOMA zones (e.g., FIG. 9) or at fixed NOMA zones (e.g., FIG. 10). A latency service class may be implemented by configuring an initial transmission in one or more (e.g., all) NOMA zones for low latency transmission and/or an initial transmission in N>1 NOMA zones for transmissions that may tolerate more latency.

On data arrival at the WTRU for transmission, e.g., to the gNB, the WTRU may identify transmit parameters/characteristics (e.g., the service class, such as one or more of reliability, latency, etc.) of the data to be sent. The WTRU may identify the service class as low reliability, medium reliability, and/or high reliability data. The WTRU may identify the service class as suitable for one or more MASs (e.g., suitable as a low power and/or high power WTRU in a power domain NOMA transmission).

The WTRU may start transmission at the initial zones for NOMA transmission, for example, based on the service class of the WTRU allowed. If a WTRU has traffic from multiple service classes to send, the WTRU may send information (e.g., all the information) in a zone (e.g., the zone for the most restrictive service class). If a WTRU has traffic from multiple service classes to send, the WTRU may send the traffic for a (e.g., each) service class in the WTRU's initial NOMA zone. The WTRU may select parameters/characteristics for NOMA transmission.

The WTRU may select parameters/characteristics for the NOMA transmission, for example, based on the selected NOMA zone. The parameters/characteristics may include one or more characteristics of the DMRS index, the MAS, and/or the MAS indicator. If the NOMA transmission parameters/characteristics are similar (e.g., identical), the WTRU may be configured with the NOMA transmission parameters/characteristics during the initial configuration.

The WTRU may transmit the uplink NOMA payload to the gNB in the NOMA zone using NOMA parameters/characteristics (e.g., the appropriate NOMA parameters/characteristics). The WTRU may transmit a NOMA indicator (e.g., accompanying indicator).

The WTRU may listen for a downlink transmission from the gNB, for example, to indicate if the transmission was successful (ACK), unsuccessful (NACK), or unknown (e.g., no receipt of a packet from the gNB). If the transmission is successful (e.g., receiving a ACK message), the NOMA transmission may end. If the transmission is unsuccessful (e.g., receiving a NACK message and/or unknown), the WTRU may perform one of more of the following. The WTRU may end the transmission, if the information is not critical (e.g., information from an IOT device). The WTRU may retransmit the information in the next NOMA zone. The WTRU may receive a gNB grant identifying dedicated resources for transmission of the information, for example, on completion of a number (e.g., a maximum number) of transmissions. Receiving a gNB grant identifying dedicated resources for transmission of the information may be useful for a high reliability service class that may have failed. An example WTRU implementation for NOMA transmission described herein is shown on FIG. 11 and/or similarly shown in FIG. 15.

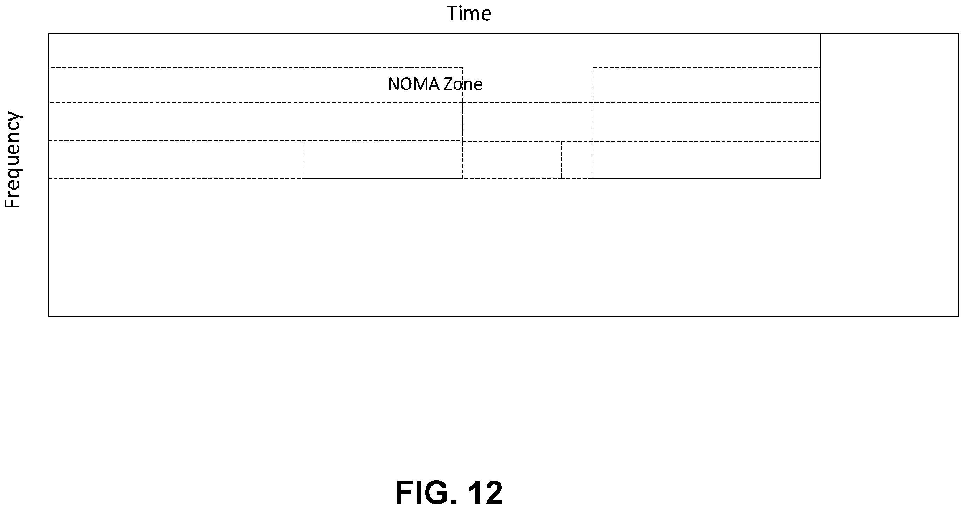

As shown on FIG. 12, a NOMA zone (e.g., a single NOMA zone) may be used and the MAS used within the zone may reflect the service class of the MA payload.

A set of MASs may be configured, for example, to enable multiple MASs (e.g., representing multiple service classes) to coexist within the same NOMA zone. For example, a MAS (e.g., a MAS representing a higher reliability) may include a set of MASs that may be repetitions of another (e.g., each other). The higher level reliability MAS may have a similar (e.g., the same) separation characteristics to the lower level reliability MAS. The lower level reliability MASs may have a similar (e.g., the same) separation chrematistics to each other (e.g., semi-orthogonal). The similar (e.g., the same) separation characteristics between the higher level reliability MAS and the lower level reliabitliy MAS and the lower level reliability MASs may be defined as a nested MAS. Transmission by WTRUs with different sized NOMA payloads may be performed within a NOMA zone (e.g., a single NOMA zone).

The WTRU transmitting the NOMA payload may indicate (e.g., may need to indicate) the NOMA transmission parameters/characteristics to the gNB. The NOMA transmission parameters/characteristics to the gNB may enable the gNB to decode the NOMA payload (e.g., decode the NOMA payload correctly).

Parameters to be included in the NOMA indicator may include one or more of the following: a repetition factor parameter, a MAS parameter, and/or a quality of the channel estimate parameter (e.g., derived from the DMRS). A repetition factor parameter may include a maximum number of repetitions and/or a specific repetition allowed. A MAS parameter may include a length of MAS, a maximum number of MASs allowed, and/or a MAS group (e.g., when the MASs are grouped to indicate interfering MASs that may be used). The quality of the channel estimate parameter derived from the DMRS may include a type of DMRS (e.g., OMA and/or NOMA), density of DMRS, and/or a number of DMRS symbols. If a 2-time symbol DMRS is selected, the MASs may avoid transmitting in the resources allocated to the 2-symbol DMRS.

A WTRU may transmit a NOMA transmission without a MAS indication. For example, a MAS indication may be used to indicate (e.g., indicate to a NOMA receiver) information (e.g., all information) for a NOMA receiver processing and/or demodulation. The information may reduce NOMA receiver processing, avoid using an exhaustive search, and/or avoid using a blind detection attempt over a MAS space (e.g., the entire MAS space).

In an uplink NOMA transmission system, overloading of the system may be controlled by a gNB through regulating the number of available MAS. A gNB may be able to control the complexity of the receiver processing by changing the multiplicity of MAS. For example, if a gNB observes NOMA activities (e.g., a small size of NOMA activities), the gNB may indicate and/or configure WTRUs with a reduced multiplicity of MAS and/or may reduce the complexity of blind detection.

A gNB and/or a WTRU may create an identification element that is a function of the WTRU ID or a subset of the WTRU ID, such as the international mobile subscriber identity (IMSI).

A WTRU may attempt a NOMA transmission, for example, without employing a MAS indication. The WTRU may perform one or more of the following: including an identification element to indicate the WTRU's identity; including information such as HARQ re-transmission index, redundancy version, etc; encoding information element with the payload; and/or encoding the information element separately.

A WTRU may include an identification element to indicate the WTRU's identity. The identification element may include an RNTI-type information, for example, to indicate the identity of the WTRU's transmitting source.

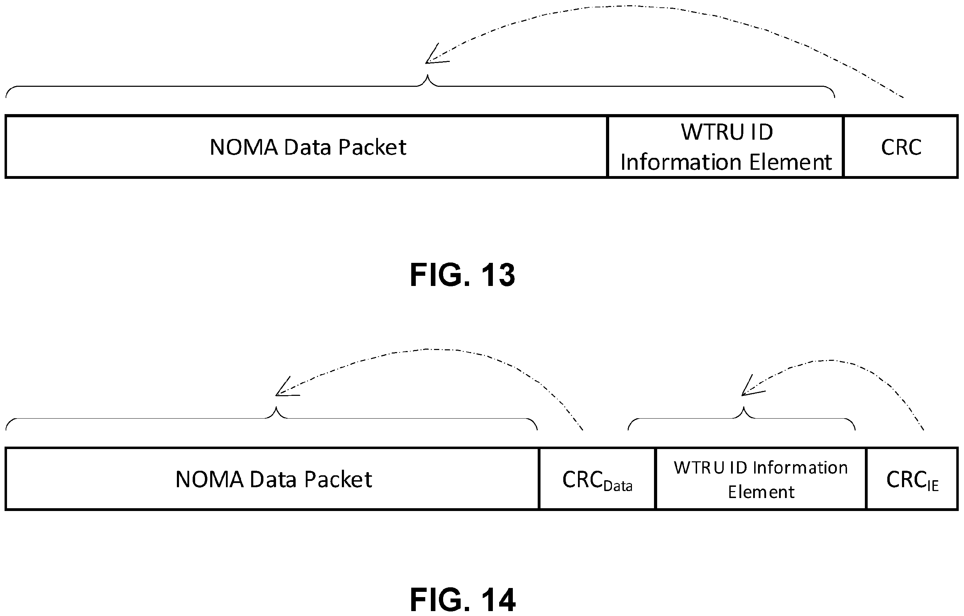

As shown in FIG. 13, a WTRU may encode the information element (e.g., may encode the information element jointly) with the payload (e.g., actual payload). A WTRU may combine an identification element with the actual payload. A WTRU may compute a cyclic redundancy check (CRC) for the payload (e.g., the entire combined payload). The WTRU may attach the computed CRC, for example, before the encoding.

As shown in FIG. 14, a WTRU may encode the information element separately. A WTRU may compute a CRC_{IE} based on (e.g., solely based on) the information element and/or the WTRU may attach the CRC_{IE} to the identification element prior to the encoding. A WTRU may transmit the encoded packet, for example, along with the data packet (e.g., the actual data packet).

FIG. 15 illustrates an example NOMA transmission in one or more NOMA zones (e.g., as shown in FIG. 6) using a MASs. According to the invention, a network (e.g., a gNB) configures a WTRU with a set of MASs and a set of NOMA resources. The WTRU determines a subset of NOMA resources. The WTRU determines one or more NOMA zones (e.g., zone 1, zone 2, etc.). The WTRU determines one or more NOMA zones based on a measured SNR. The WTRU may reduce near/far effect by determining one or more NOMA zones. The WTRU determines a subset of MASs for the subset of NOMA resources (e.g., as shown in FIG. 7 and/or FIG. 11). The WTRU determines the subset of MASs based on parameters comprising at least one of a reliability parameter or a latency parameter. The WTRU may determine transmission parameters (e.g., transmission criteria), such as an index, number of layers, retransmission index, and/or the like as described herein (e.g., as shown in FIG. 7 and/or FIG. 11). The WTRU transmits data (e.g., uplink data) using the MASs and/or NOMA resources.

FIG. 16 illustrates an example NOMA transmission in NOMA zones (e.g., as shown in FIG. 7 and/or FIG. 15) using MASs (e.g., as shown in FIG. 7, FIG. 11, and/or FIG. 15). A WTRU may determine one or more NOMA zones for transmission as described herein. For example, the WTRU may associate resources for WTRU with higher expected SNR (e.g., near WTRUs) to the first NOMA zone. The WTRU may associate resources for lower expected SNR (e.g., far WTRUs) with the second NOMA zone.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A wireless transmit/receive unit (102) comprising at least one processor configured to:
receive, from a network, configuration information comprising a set of non-orthogonal multiple access resources and a multiple access signature set, wherein the set of non-orthogonal multiple access resources comprises a first non-orthogonal multiple access zone associated with a first set of time-frequency resources and a second non-orthogonal multiple access zone associated with a second set of time-frequency resources;
determine parameters related to service quality aspects of data payload for a non-orthogonal multiple access transmission by the wireless transmit/receive unit to the network, wherein the parameters comprise at least one of a reliability parameter or a latency parameter;
determine a non-orthogonal multiple access zone from the received configuration information based on a measured signal to noise ratio, wherein the determined non-orthogonal multiple access zone comprises the first non-orthogonal multiple access zone or the second non-orthogonal multiple access zone; and
send the non-orthogonal multiple access transmission using the set of time-frequency resources associated with the determined non-orthogonal multiple access zone and using a multiple access signature determined from the multiple access signature set for the determined non-orthogonal multiple access zone according to the at least one of a reliability parameter or a latency parameter.

2. The wireless transmit/receive unit of claim 1, wherein the first non-orthogonal multiple access zone is associated with a high level reliability for the non-orthogonal multiple access transmission and the second non-orthogonal multiple access zone is associated with a low level reliability for the non-orthogonal multiple access transmission.

3. The wireless transmit/receive unit of claim 1, wherein the at least one processor is configured to send a multiple access signature indicator transmission independent from the non-orthogonal multiple access transmission, the multiple access signature indicator indicating, to the network, the determined multiple access signature used for the non-orthogonal multiple access transmission.

4. The wireless transmit/receive unit of claim 1, wherein the at least one processor is configured to include, in the non-orthogonal multiple access transmission, an identification element to indicate an identity of the wireless transmit/receive unit to the network.

5. The wireless transmit/receive unit of claim 1, wherein the at least one processor is further configured to:
determine a number of layers associated with the non-orthogonal multiple access transmission; and
send the non-orthogonal multiple access transmission in the determined non-orthogonal multiple access zone using the determined number of layers associated with the non-orthogonal multiple access transmission.

6. The wireless transmit/receive unit of claim 1, wherein the at least one processor is configured to determine the multiple access signature based on the non-orthogonal multiple access zone using one or more of on traffic types, identifications, indicated beams, RRC connection information, configuration information, and measurements.

7. The wireless transmit/receive unit of claim 1, wherein the at least one processor is further configured to:
receive an indication from the network indicating that the non-orthogonal multiple access transmission was unsuccessful;
adjust the non-orthogonal multiple access zone and the multiple access signature associated with the non-orthogonal multiple access transmission; and
resend the non-orthogonal multiple access transmission in the adjusted non-orthogonal multiple access zone using the adjusted multiple access signature.

8. The wireless transmit/receive unit of claim 7, wherein to adjust the multiple access signature, the at least one processor is configured to adjust one or more of a set of sequence indices, lengths, seeds, and cyclic phase shifts associated with the multiple access signature.

9. A method, implemented by a wireless transmit-receive unit, the method comprising:
receiving, from a network, configuration information comprising a set of non-orthogonal multiple access resources and a multiple access signature set, wherein the set of non-orthogonal multiple access resources comprises a first non-orthogonal multiple access zone associated with a first set of time-frequency resources and a second non-orthogonal multiple access zone associated with a second set of time-frequency resources;
determining parameters related to service quality aspects of data payload for a non-orthogonal multiple access transmission by the wireless transmit/receive unit to the network, wherein the parameters comprise at least one of a reliability parameter or a latency parameter;
determining a non-orthogonal multiple access zone from the received configuration information based on a measured signal to noise ratio, wherein the determined non-orthogonal multiple access zone comprises the first non-orthogonal multiple access zone or the second non-orthogonal multiple access zone; and
sending the non-orthogonal multiple access transmission using the set of time-frequency resources associated with the determined non-orthogonal multiple access zone and using a multiple access signature determined from the multiple access signature set for the determined non-orthogonal multiple access zone according to the at least one of a reliability or a latency parameter.

10. The method of claim 9, wherein the first non-orthogonal multiple access zone is associated with a high level reliability for the non-orthogonal multiple access transmission and the second non-orthogonal multiple access zone is associated with a low level reliability for the non-orthogonal multiple access transmission.

11. The method of claim 9, wherein the method further comprises sending of a multiple access signature indicator transmission independent from the non-orthogonal multiple access transmission, the multiple access signature indicator indicating, to the network, the determined multiple access signature used for the non-orthogonal multiple access transmission.

12. The method of claim 9, wherein the method further comprises including, in the non-orthogonal multiple access transmission, an identification element to indicate an identity of the wireless transmit/receive unit to the network.

13. The method of claim 9, wherein the method further comprises:
determining a number of layers associated with the non-orthogonal multiple access transmission; and
sending the non-orthogonal multiple access transmission in the determined non-orthogonal multiple access zone using the determined number of layers associated with the non-orthogonal multiple access transmission.

14. The method of claim 9, wherein determining the multiple access signature based on the non-orthogonal multiple access zone comprises using one or more of on traffic types, identifications, indicated beams, RRC connection information, configuration information, and measurements.

15. The method of claim 9, wherein the method further comprises:
receiving an indication from the network indicating that the non-orthogonal multiple access transmission was unsuccessful;
adjusting the non-orthogonal multiple access zone and the multiple access signature associated with the non-orthogonal multiple access transmission; and
resending the non-orthogonal multiple access transmission in the adjusted non-orthogonal multiple access zone using the adjusted multiple access signature.

## Patentansprüche

1. Drahtlose Sende/Empfangs-Einheit (102), die mindestens einen Prozessor umfasst, der konfiguriert ist zum:
Empfangen von Konfigurationsinformationen, die eine Menge von Betriebsmitteln für den nichtorthogonalen Mehrfachzugriff und eine Mehrfachzugriffs-Signaturmenge umfassen, von einem Netz, wobei die Menge von Betriebsmitteln für den nichtorthogonalen Mehrfachzugriff eine erste Zone für den nichtorthogonalen Mehrfachzugriff, der eine erste Menge von Zeit-Frequenz-Betriebsmitteln zugeordnet sind, und eine zweite Zone für den nichtorthogonalen Mehrfachzugriff, der eine zweite Menge von Zeit-Frequenz-Betriebsmitteln zugeordnet sind, umfasst;
Bestimmen von Parametern in Bezug auf Dienstgüteaspekte von Nutzdaten für eine Sendung des nichtorthogonalen Mehrfachzugriffs durch die drahtlose Sende/Empfangs-Einheit an das Netz, wobei die Parameter einen Zuverlässigkeitsparameter und/oder einen Latenzparameter umfassen;
Bestimmen einer Zone für den nichtorthogonalen Mehrfachzugriff aus den empfangenen Konfigurationsinformationen auf der Grundlage eines gemessenen Signal/Rausch-Verhältnisses, wobei die bestimmte Zone für den nichtorthogonalen Mehrfachzugriff die erste Zone für den nichtorthogonalen Mehrfachzugriff oder die zweite Zone für den nichtorthogonalen Mehrfachzugriff umfasst; und
Senden der Sendung des nichtorthogonalen Mehrfachzugriffs unter Verwendung der Menge von Zeit-Frequenz-Betriebsmitteln, die der bestimmten Zone für den nichtorthogonalen Mehrfachzugriff zugeordnet sind, und unter Verwendung einer Mehrfachzugriffssignatur, die in Übereinstimmung mit dem Zuverlässigkeitsparameter und/oder dem Latenzparameter aus der Mehrfachzugriffs-Signaturmenge für die bestimmte Zone für den nichtorthogonalen Mehrfachzugriff bestimmt worden ist.

2. Drahtlose Sende/Empfangs-Einheit nach Anspruch 1, wobei der ersten Zone für den nichtorthogonalen Mehrfachzugriff ein hohes Niveau der Zuverlässigkeit für die Sendung des nichtorthogonalen Mehrfachzugriffs zugeordnet ist und der zweiten Zone für den nichtorthogonalen Mehrfachzugriff ein niedriges Niveau der Zuverlässigkeit für die Sendung des nichtorthogonalen Mehrfachzugriffs zugeordnet ist.

3. Drahtlose Sende/Empfangs-Einheit nach Anspruch 1, wobei der mindestens eine Prozessor dafür konfiguriert ist, unabhängig von der Sendung des nichtorthogonalen Mehrfachzugriffs eine Mehrfachzugriffssignatur-Indikatorsendung zu senden, wobei der Mehrfachzugriffssignatur-Indikator für das Netz die bestimmte Mehrfachzugriffssignatur angibt, die für die Sendung des nichtorthogonalen Mehrfachzugriffs verwendet wird.

4. Drahtlose Sende/Empfangs-Einheit nach Anspruch 1, wobei der mindestens eine Prozessor dafür konfiguriert ist, in die Sendung des nichtorthogonalen Mehrfachzugriffs ein Identifizierungselement zum Angeben einer Identität der drahtlosen Sende/Empfangs-Einheit für das Netz aufzunehmen.

5. Drahtlose Sende/Empfangs-Einheit nach Anspruch 1, wobei der mindestens eine Prozessor ferner konfiguriert ist zum:
Bestimmen einer Anzahl von Schichten, die der Sendung des nichtorthogonalen Mehrfachzugriffs zugeordnet sind; und
Senden der Sendung des nichtorthogonalen Mehrfachzugriffs in der vorgegebenen Zone für den nichtorthogonalen Mehrfachzugriff unter Verwendung der bestimmten Anzahl von Schichten, die der Sendung des nichtorthogonalen Mehrfachzugriffs zugeordnet sind.

6. Drahtlose Sende/Empfangs-Einheit nach Anspruch 1, wobei der mindestens eine Prozessor dafür konfiguriert ist, die Mehrfachzugriffssignatur auf der Grundlage der Zone für den nichtorthogonalen Mehrfachzugriff unter Verwendung von Verkehrstypen und/oder Identifizierungen und/oder angegebenen Strahlen und/oder RRC-Verbindungsinformationen und/oder Konfigurationsinformationen und/oder Messwerten zu bestimmen.

7. Drahtlose Sende/Empfangs-Einheit nach Anspruch 1, wobei der mindestens eine Prozessor ferner konfiguriert ist zum:
Empfangen einer Angabe von dem Netz, die angibt, dass die Sendung des nichtorthogonalen Mehrfachzugriffs erfolglos war;
Anpassen der Zone für den nichtorthogonalen Mehrfachzugriff und der Mehrfachzugriffssignatur, die der Sendung des nichtorthogonalen Mehrfachzugriffs zugeordnet sind; und
erneutes Senden der Sendung des nichtorthogonalen Mehrfachzugriffs in der angepassten Zone für den nichtorthogonalen Mehrfachzugriff unter Verwendung der angepassten Mehrfachzugriffssignatur.

8. Drahtlose Sende/Empfangs-Einheit nach Anspruch 7, wobei der mindestens eine Prozessor zum Anpassen der Mehrfachzugriffssignatur dafür konfiguriert ist, eine Menge von Sequenzindizes und/oder Längen und/oder Keimen und/oder zyklischen Phasenverschiebungen, die der Mehrfachzugriffssignatur zugeordnet sind, anzupassen.

9. Verfahren, das durch eine drahtlose Sende/Empfangs-Einheit implementiert wird, wobei das Verfahren umfasst:
Empfangen von Konfigurationsinformationen, die eine Menge von Betriebsmitteln für den nichtorthogonalen Mehrfachzugriff und eine Mehrfachzugriffs-Signaturmenge umfassen, von einem Netz, wobei die Menge von Betriebsmitteln für den nichtorthogonalen Mehrfachzugriff eine erste Zone für den nichtorthogonalen Mehrfachzugriff, der eine erste Menge von Zeit-Frequenz-Betriebsmitteln zugeordnet sind, und eine zweite Zone für den nichtorthogonalen Mehrfachzugriff, der eine zweite Menge von Zeit-Frequenz-Betriebsmitteln zugeordnet sind, umfasst;
Bestimmen von Parametern in Bezug auf Dienstgüteaspekte von Nutzdaten für eine Sendung des nichtorthogonalen Mehrfachzugriffs durch die drahtlose Sende/Empfangs-Einheit an das Netz, wobei die Parameter einen Zuverlässigkeitsparameter und/oder einen Latenzparameter umfassen;
Bestimmen einer Zone für den nichtorthogonalen Mehrfachzugriff aus den empfangenen Konfigurationsinformationen auf der Grundlage eines gemessenen Signal/Rausch-Verhältnisses, wobei die bestimmte Zone für den nichtorthogonalen Mehrfachzugriff die erste Zone für den nichtorthogonalen Mehrfachzugriff oder die zweite Zone für den nichtorthogonalen Mehrfachzugriff umfasst; und
Senden der Sendung des nichtorthogonalen Mehrfachzugriffs unter Verwendung der Menge von Zeit-Frequenz-Betriebsmitteln, die der bestimmten Zone für den nichtorthogonalen Mehrfachzugriff zugeordnet sind, und unter Verwendung einer Mehrfachzugriffssignatur, die in Übereinstimmung mit dem Zuverlässigkeits- und/oder Latenzparameter aus der Mehrfachzugriffs-Signaturmenge für die bestimmte Zone für den nichtorthogonalen Mehrfachzugriff bestimmt worden ist.

10. Verfahren nach Anspruch 9, wobei der ersten Zone für den nichtorthogonalen Mehrfachzugriff ein hohes Niveau der Zuverlässigkeit für die Sendung des nichtorthogonalen Mehrfachzugriffs zugeordnet ist und der zweiten Zone für den nichtorthogonalen Mehrfachzugriff ein niedriges Niveau der Zuverlässigkeit für die Sendung des nichtorthogonalen Mehrfachzugriffs zugeordnet ist.

11. Verfahren nach Anspruch 9, wobei das Verfahren ferner das Senden einer Mehrfachzugriffssignatur-Indikatorsendung unabhängig von der Sendung des nichtorthogonalen Mehrfachzugriffs umfasst, wobei der Mehrfachzugriffssignatur-Indikator für das Netz die bestimmte Mehrfachzugriffssignatur angibt, die für die Sendung des nichtorthogonalen Mehrfachzugriffs verwendet wird.

12. Verfahren nach Anspruch 9, wobei das Verfahren ferner das Aufnehmen eines Identifizierungselements zum Angeben einer Identität der drahtlosen Sende/Empfangs-Einheit für das Netz in die Sendung des nichtorthogonalen Mehrfachzugriffs umfasst.

13. Verfahren nach Anspruch 9, wobei das Verfahren ferner umfasst:
Bestimmen einer Anzahl von Schichten, die der Sendung des nichtorthogonalen Mehrfachzugriffs zugeordnet sind; und
Senden der Sendung des nichtorthogonalen Mehrfachzugriffs in der vorgegebenen Zone für den nichtorthogonalen Mehrfachzugriff unter Verwendung der bestimmten Anzahl von Schichten, die der Sendung des nichtorthogonalen Mehrfachzugriffs zugeordnet sind.

14. Verfahren nach Anspruch 9, wobei das Bestimmen der Mehrfachzugriffssignatur auf der Grundlage der Zone für den nichtorthogonalen Mehrfachzugriff das Verwenden von Verkehrstypen und/oder Identifizierungen und/oder angegebenen Strahlen und/oder RRC-Verbindungsinformationen und/oder Konfigurationsinformationen und/oder Messwerten umfasst.

15. Verfahren nach Anspruch 9, wobei das Verfahren ferner umfasst:
Empfangen einer Angabe von dem Netz, die angibt, dass die Sendung des nichtorthogonalen Mehrfachzugriffs erfolglos war;
Anpassen der Zone für den nichtorthogonalen Mehrfachzugriff und der Mehrfachzugriffssignatur, die der Sendung des nichtorthogonalen Mehrfachzugriffs zugeordnet sind; und
erneutes Senden der Sendung des nichtorthogonalen Mehrfachzugriffs in der angepassten Zone für den nichtorthogonalen Mehrfachzugriff unter Verwendung der angepassten Mehrfachzugriffssignatur.

## Revendications

1. Unité d'émission/de réception sans fil (102) comprenant au moins un processeur configuré pour :
recevoir, d'un réseau, des informations de configuration comprenant un ensemble de ressources d'accès multiple non orthogonal et un ensemble de signatures d'accès multiple, où l'ensemble de ressources d'accès multiple non orthogonal comprend une première zone d'accès multiple non orthogonal associée à un premier ensemble de ressources temps-fréquence et une deuxième zone d'accès multiple non orthogonal associée à un deuxième ensemble de ressources temps-fréquence ;
déterminer des paramètres relatifs aux aspects de qualité de service de la charge utile de données pour une transmission à accès multiple non orthogonal par l'unité d'émission/de réception sans fil vers le réseau, où les paramètres comprennent au moins un paramètre de fiabilité ou un paramètre de latence ;
déterminer une zone d'accès multiple non orthogonal à partir des informations de configuration reçues d'après un rapport signal/bruit mesuré, où la zone d'accès multiple non orthogonal déterminée comprend la première zone d'accès multiple non orthogonal ou la deuxième zone d'accès multiple non orthogonal ; et
envoyer la transmission à accès multiple non orthogonal à l'aide de l'ensemble de ressources temps-fréquence associé à la zone d'accès multiple non orthogonal déterminée et à l'aide d'une signature d'accès multiple déterminée à partir de l'ensemble de signatures d'accès multiple pour la zone d'accès multiple non orthogonal déterminée en fonction de l'au moins un paramètre de fiabilité ou paramètre de latence.

2. Unité d'émission/de réception sans fil selon la revendication 1, dans laquelle la première zone d'accès multiple non orthogonal est associée à un niveau de fiabilité élevé pour la transmission à accès multiple non orthogonal et la deuxième zone d'accès multiple non orthogonal est associée à un niveau de fiabilité faible pour la transmission à accès multiple non orthogonal.

3. Unité d'émission/de réception sans fil selon la revendication 1, dans laquelle l'au moins un processeur est configuré pour envoyer une transmission d'indicateur de signature d'accès multiple indépendante de la transmission à accès multiple non orthogonal, l'indicateur de signature d'accès multiple indiquant au réseau la signature d'accès multiple déterminée utilisée pour la transmission à accès multiple non orthogonal.

4. Unité d'émission/de réception sans fil selon la revendication 1, dans laquelle l'au moins un processeur est configuré pour inclure, dans la transmission à accès multiple non orthogonal, un élément d'identification pour indiquer une identité de l'unité d'émission/de réception sans fil au réseau.

5. Unité d'émission/de réception sans fil selon la revendication 1, dans laquelle l'au moins un processeur est en outre configuré pour :
déterminer un nombre de couches associées à la transmission à accès multiple non orthogonal ; et
envoyer la transmission à accès multiple non orthogonal dans la zone d'accès multiple non orthogonal déterminée à l'aide du nombre déterminé de couches associées à la transmission à accès multiple non orthogonal.

6. Unité d'émission/de réception sans fil selon la revendication 1, dans laquelle l'au moins un processeur est configuré pour déterminer la signature d'accès multiple à partir de la zone d'accès multiple non orthogonal à l'aide d'un ou de plusieurs des éléments suivants : types de trafic, identifications, faisceaux indiqués, informations de connexion RRC, informations de configuration et mesures.

7. Unité d'émission/de réception sans fil selon la revendication 1, dans laquelle l'au moins un processeur est en outre configuré pour :
recevoir une indication du réseau indiquant que la transmission à accès multiple non orthogonal a échoué ;
ajuster la zone d'accès multiple non orthogonal et la signature d'accès multiple associée à la transmission à accès multiple non orthogonal ; et
renvoyer la transmission à accès multiple non orthogonal dans la zone d'accès multiple non orthogonal ajustée à l'aide de la signature d'accès multiple ajustée.

8. Unité d'émission/de réception sans fil selon la revendication 7, dans laquelle pour ajuster la signature d'accès multiple, l'au moins un processeur est configuré pour ajuster un ou plusieurs éléments parmi un ensemble d'indices de séquence, des longueurs, des valeurs initiales et des déplacements de phase cycliques associés à la signature d'accès multiple.

9. Procédé mis en oeuvre par une unité d'émission-de réception sans fil, le procédé comprenant :
la réception, depuis un réseau, d'informations de configuration comprenant un ensemble de ressources d'accès multiple non orthogonal et un ensemble de signatures d'accès multiple, où l'ensemble de ressources d'accès multiple non orthogonal comprend une première zone d'accès multiple non orthogonal associée à un premier ensemble de ressources temps-fréquence et une deuxième zone d'accès multiple non orthogonal associée à un deuxième ensemble de ressources temps-fréquence ;
la détermination de paramètres relatifs aux aspects de qualité de service de la charge utile de données pour une transmission à accès multiple non orthogonal par l'unité d'émission/de réception sans fil vers le réseau, où les paramètres comprennent au moins un paramètre de fiabilité ou un paramètre de latence ;
la détermination d'une zone d'accès multiple non orthogonal à partir des informations de configuration reçues d'après un rapport signal/bruit mesuré, où la zone d'accès multiple non orthogonal déterminée comprend la première zone d'accès multiple non orthogonal ou la deuxième zone d'accès multiple non orthogonal ; et
l'envoi de la transmission à accès multiple non orthogonal à l'aide de l'ensemble de ressources temps-fréquence associé à la zone d'accès multiple non orthogonal déterminée et à l'aide d'une signature d'accès multiple déterminée à partir de l'ensemble de signatures d'accès multiple pour la zone d'accès multiple non orthogonal déterminée en fonction de l'au moins un paramètre de fiabilité ou de latence.

10. Procédé selon la revendication 9, dans lequel la première zone d'accès multiple non orthogonal est associée à un niveau de fiabilité élevé pour la transmission à accès multiple non orthogonal et la deuxième zone d'accès multiple non orthogonal est associée à un niveau de fiabilité faible pour la transmission à accès multiple non orthogonal.

11. Procédé selon la revendication 9, dans lequel l'au moins un procédé comprend en outre l'envoi d'une transmission d'indicateur de signature d'accès multiple indépendante de la transmission à accès multiple non orthogonal, l'indicateur de signature d'accès multiple indiquant au réseau la signature d'accès multiple déterminée utilisée pour la transmission à accès multiple non orthogonal.

12. Procédé selon la revendication 9, dans lequel le procédé comprend en outre l'inclusion, dans la transmission à accès multiple non orthogonal, d'un élément d'identification pour indiquer une identité de l'unité d'émission/de réception sans fil au réseau.

13. Procédé selon la revendication 9, dans lequel le procédé comprend en outre :
la détermination d'un nombre de couches associées à la transmission à accès multiple non orthogonal ; et
l'envoi de la transmission à accès multiple non orthogonal dans la zone d'accès multiple non orthogonal déterminée à l'aide du nombre déterminé de couches associées à la transmission à accès multiple non orthogonal.

14. Procédé selon la revendication 9, dans lequel la détermination de la signature d'accès multiple à partir de la zone d'accès multiple non orthogonal comprend l'utilisation d'un ou de plusieurs des éléments suivants : types de trafic, identifications, faisceaux indiqués, informations de connexion RRC, informations de configuration et mesures.

15. Procédé selon la revendication 9, dans lequel le procédé comprend en outre :
la réception d'une indication du réseau indiquant que la transmission à accès multiple non orthogonal a échoué ;
l'ajustement de la zone d'accès multiple non orthogonal et de la signature d'accès multiple associée à la transmission à accès multiple non orthogonal ; et
le renvoi de la transmission à accès multiple non orthogonal dans la zone d'accès multiple non orthogonal ajustée à l'aide de la signature d'accès multiple ajustée.
